# EUROPEAN PATENT SPECIFICATION

(11) **EP 3 542 300 B1**
(45) Date of publication and mention of the grant of the patent: **26.07.2023**
(21) Application number: 16795336.3
(22) Date of filing: 15.11.2016
(51) Int. Cl.: G06F 21/57, H04L 9/40

(54) **METHOD FOR OPERATING A PEER-TO-PEER APPLICATION**
VERFAHREN ZUM BETRIEB EINER PEER-TO-PEER-ANWENDUNG
PROCÉDÉ DE FONCTIONNEMENT D'UNE APPLICATION DE PAIR À PAIR

(43) Date of publication of application: 25.09.2019
(73) Proprietor: Innogy Innovation GmbH, 45139 Essen (DE)
(72) Inventor: STÖCKER, Carsten, 40724 Hilden (DE)
(74) Representative: Cohausz & Florack
(86) International application number: PCT/EP2016/077665
(87) International publication number: WO 2018/091066

(56) References cited:
- US-A1- 2003 056 093
- US-A1- 2003 070 070

## Description

The invention relates to a method for operating at least one peer-to-peer network having at least one peer-to-peer application. The invention relates also to a peer-to-peer system, a peer-to-peer application and a verification entity.

Client-server structures and systems, respectively, are more and more substituted by so called "peer-to-peer" networks having at least one so called "peer-to-peer" application (e.g. a block chain). Peer-to-peer networks and peer-to-peer applications, respectively, completely differ from conventional client-server systems. A process, task, action or the like can be managed and controlled by a peer-to-peer application with a higher security level, and at the same time, much lower effort. More particularly, instead of a central server or a platform, a peer-to-peer network (also called a framework) undertakes the in particular tamper-proof controlling and monitoring of one or more process(es). By means of a peer-to-peer application, high security standards are achieved in that all computers (peer nodes or simply "nodes") in the peer-to-peer network, at least a part of the nodes in the peer-to-peer network, at least monitor(s) the process, in particular, by executing a controlling means (or another means), in particular, formed by a machine-readable code element.

As described, means implemented or installed in the peer-to-peer application may be formed by machine-readable code element(s) executable by the nodes of the peer-to-peer network. For instance, a receipt of a data set by the peer-to-peer application can (automatically) initiate the execution of a machine-readable code element. This means that the data set is processed in a specific way. A result of the process may be provided by the peer-to-peer application e.g. to a further machine-readable code element and/or to a participating entity of the peer-to-peer system. As described above, high security standards are achieved in that at least a part of the nodes in the peer-to-peer network conduct and/or monitor the execution of the at least one machine-readable code element.

In order to generate a new (machine-readable) code element, e.g. a smart contract, in a first step, a human-readable code element comprising human language and/or programming language can be generated e.g. by a participating entity. For instance, a new human-readable code element can be created by using predefined (human-readable code) templates. In a next step, the human-readable code element (e.g. a in form of programming language or source code) can be converted (compiled) into a corresponding machine-readable code element (e.g. a smart contract of a peer-to-peer application executable by at least a part of the nodes of the peer-to-peer network) by a compiler provided e.g. by a further participating entity.

As described hereinbefore, a main advantage of a peer-to-peer application and peer-to-peer network, respectively, is the high security standard of such a system. However, it has been found that there are still manipulation options for unauthorized users to manipulate the functioning of at least a part of the peer-to-peer application. One critical component of a peer-to-peer system is the one or more compiler(s) used for converting the human-readable code element into a machine-readable code element (e.g. so called "µ-code" or "opcodes"). In particular, the compiler itself can be manipulated. A manipulated compiler may convert the provided human-readable code element into a manipulated machine-readable code element. However, the machine-readable code element cannot be analyzed by a user. In particular, the machine-readable code element is not readable by a user in order to verify the correctness of the used machine-readable code. Hence, there is still a manipulation risk regarding peer-to-peer applications.

Moreover, in particular, tree-like or graph-like machine-readable code element structures (with a so-called master or proxy contract at the top that is linked or points to at least one further smart contract during its execution) but also other code element structures in a peer-to-peer application are a further point of attack for a manipulation of the peer-to-peer application. For instance, a first machine-readable code element may comprise one or more machine-readable (sub-)code element(s). The machine-readable code elements of the tree-like or graph-like machine code element structure can be coupled to each other by a hash algorithm. Thereby, the first machine-readable code element and route machine-readable code element, respectively, may comprise a respective hash value and/or a unique communication address. However, according to prior art, a machine-readable code element may be substituted by another (e.g. manipulated) machine-readable code element without a possibility to detect such a substitution e.g. by a user of the peer-to-peer application. From this follows that, according to prior art, an exchange of a machine-readable sub-code element, and thus, a potential manipulation of the peer-to-peer application might not be detected (by a user).

Hence, a manipulation of at least part of a peer-to-peer application is currently not detectable.

Document US 2003/0070070 A1 relates to computer networks, and more particularly to a trust spectrum for certificate distribution in distributed peer-to-peer networks, wherein a decentralized, distributed trust mechanism is provided to implement trust relationships between and among peers and to implement trust relationships between peers and content and data (codat). Document US 2003/056093 A1 discloses a method for ensuring valid and secure peer-to-peer communications in a group structure.

Therefore, it is an object of the present application to provide a method for operating a peer-to-peer application, which enables at least to reduce the manipulation risk of a peer-to-peer application.

The above object is solved according to a first aspect of the present invention by a method according to claim 1. The method for operating at least one peer-to-peer system with at least one peer-to-peer network having at least one peer-to-peer application comprises:
- providing at least one human-readable code element associated with at least one function attribute, comprising a test input parameter set and at least one test output data set,
- registering at least the human-readable code element,
- wherein registering the human-readable code element comprises:
- assigning a code identifier to the human-readable code element,
- storing at least the code identifier of the human-readable code element and the function attribute associated with the human-readable code element as a registering data set by the peer-to-peer application in at least one registry storage inspectable by at least a part of the participating entities of the peer-to-peer system,
- converting the human-readable code element into at least one machine-readable code element implementable at least in a peer-to-peer application, and
- verifying the functionality of the converted machine-readable code element by means of at least one verifying means at least based on the stored function attribute associated to the human-readable code element, wherein verifying the functionality of the machine-readable code element comprises:
- conducting at least one function test process by at least executing the converted machine-readable code element on at least one computing device with the test input parameter data set,
- analyzing the conducted function test process at least based on the stored function attribute by comparing the actual test output data set with the test output data set stored, wherein if the actual test output data set is identical to the test output data set stored in form of function attributes, it is followed that the machine-readable code element is not manipulated, and
- providing a verification result based on the conducted analysis.

In contrast to prior art, preferably, each generated and provided human-readable code element can be registered in the at least one peer-to-peer application by storing at least its identifier and at least one associated function attribute within an inspectable registry storage. By storing one or more functions attribute(s) of a human-readable code element in an inspectable registry storage, preferably, each participating entity of the peer-to-peer system is given the opportunity to access the registry storage in order to check and verify, respectively, the functioning of a corresponding machine-readable code element.

A peer-to-peer network may comprise a plurality of nodes connected to each other using any kind of standard communication connection(s). Preferably, each node comprises the same peer-to-peer application. A node can be used for operating two or more peer-to-peer applications of one or more peer-to-peer network(s).

In comparison to a client server system in which a server provides a service (e.g. conversion or verification process) and a client uses the service, these roles are cancelled in the present peer-to-peer network. Each participant (including nodes) of the peer-to-peer network can use a service and the like and offer such a service. In particular, a peer-to-peer network is self-determined and/or self-organized (without any higher-level units). In the present case, preferably each node and computer, respectively, of the peer-to-peer network comprises the (same) peer-to-peer application.

According to the present method, at least one human-readable code element comprising e.g. human-readable language and/or programming language is provided. For instance, the human-readable code element (e.g. in form of human-readable contract template(s) or source code) is provided by a creating entity, such as a computing device of a user. At least one function attribute is associated with the human-readable code element. Associating the function attribute to the human-readable code element can be, preferably, conducted by the creating entity. A function attribute according to the present application comprises at least part-information about the correct and/or desired functioning of the human-readable code element (and, in particular, the machine-readable code element corresponding to said human-readable code element) associated with said function attribute. For instance, a function attribute according to the present application can comprise a formal proof of the correctness of underlying algorithm(s) of the machine-readable code element in relation to a formal specification, the formal specification. Thereby, one or more function attribute(s) may enable to verify whether a corresponding machine-readable code works correctly. In particular, it can be checked whether a corresponding machine-readable code is manipulated or not executed as expected e.g. by a manipulated, defective or a non-functioning compiler used for the conversion.

Further, during a conversion / compiling process of a human-readable code element to a machine-readable code element special metadata can be produced that allow or support a back-ward conversion / de-compiling process. These metadata can be hashed, signed and/or time-stamped and may be stored in a registry storage. De-compiling machine-readable code and analyzing the de-complied source code may be part of above mentioned verification process or any later process of analyzing the machine-readable code (e.g. of a smart contract).

The human-readable code element can be registered in the peer-to-peer system by storing at least a (unique) code identifier assigned to the human-readable code element and at least the at least one function attribute associated with the human-readable code element in a registry storage. A registering data set of said human-readable code element and, preferably, of the corresponding machine-readable code element comprising at least a function attribute and a code identifier can be stored. Assigning a code identifier to the human-readable code element can include generating the code identifier, such as a communication address, hash value or the like. For instance, the peer-to-peer application can comprise a respective code identifier generating means.

The storing process can be controlled and, in particular, conducted by a storing means (e.g. a machine-readable code element, such as a smart contract) of the peer-to-peer application. The storing means may be configured to control each storing (and deletion) process relating to said at least one registry storage. The registry storage can be a part of the peer-to-peer application.

Preferably, a storage arrangement comprising at least the registry storage is provided, wherein the storage arrangement is controlled by the peer-to-peer application. In particular, the peer-to-peer application can enable and control access to said storage arrangement. According to the present application, the access can be controlled such that at least a part of the participating entities of the peer-to-peer system can inspect the stored data, e.g. the registering data set(s) comprising at least a code identifier and one or more function attribute(s). Preferably, each participating entity may be capable of inspecting said registry storage. It shall be understood that access limitation can be defined.

A participating entity according to the present application is, preferably, every entity which can interact with the peer-to-peer application. This means that the participating entity might be a node of the peer-to-peer network comprising at least a part of the peer-to-peer application or an entity configured to merely communicate with the peer-to-peer application. The latter entity might be a computing device (and/or user of said computing device), wherein at least one peer-to-peer module is assigned to said entity. The peer-to-peer module is, in particular, configured to communicate, e.g. send/receive messages to/from the peer-to-peer application. The peer-to-peer module may be a peer and node, respectively, of the peer-to-peer network. Preferably, each peer-to-peer module is uniquely assigned to a computing device (or user of said computing device). For instance, each computing device can comprise a peer-to-peer module. Preferably, the peer-to peer module can be integrated in the computing device, such as a computer, mobile phone, home controller, vehicle, cyber-physical system (CPS) module, etc.

It is also possible that a communication connection is provided between the computing device and a (remotely arranged) peer-to-peer module assigned to said device. This means that the peer-to-peer module can at least communicate and/or act on behalf of the computing device. For example, the peer-to-peer module can be partly formed by a separate processing device, such as mobile communication device (e.g. mobile phone, mobile computer, etc.), or it can run on a remote stationary processing device (e.g. in a data center). In case of a mobile communication device or a remote processing device, the at least one computing device may have a (secure) communication channel to the processing device (or mobile communication device) of the data center and the processing device itself may have a connection to the peer-to-peer network. In an embodiment, the remote processing device may be a "gateway" to the peer-to-peer network. This means that the computing device can securely communicate via its peer-to-peer module and the gateway to the peer-to-peer network.

Examples of such participating entities are creating entities, verification entities and conversion entities providing a compiler.

According to the method according to the present application, the method further comprises:
- converting the human-readable code element into at least one machine-readable code element implementable at least in a peer-to-peer application, and
- verifying the functionality of the converted machine-readable code element by means of at least one verifying means at least based on the stored function attribute associated to the human-readable code element.

Preferably, at least one compiler can be provided. The compiler can be configured to convert the human-readable code element - by executing a compilation algorithm - into at least one machine-readable code element. The compiler can be formed by a compiling means implemented in the peer-to-peer application. Alternatively or additionally, one or more compiling entity(ies) having a peer-to-peer module and one or more compiler(s) can be provided. As described above, the peer-to-peer module can be used to enable communication between the compiler(s) and the peer-to-peer application. For instance, by means of the peer-to-peer application a provided human-readable code element can be transmitted to the peer-to-peer module of a conversion entity. Upon conversion of said transmitted human-readable code element, the converted machine-readable code element can be provided to the peer-to-peer application by means of said peer-to-peer module.

Alternatively or additionally, at least one on-chain compiling entity comprising a peer-to-peer module may control off-chain compiling entity execution. Proof(s) and/or verifying results of the correct off-chain compiler execution may be stored in the registry storage. Proof(s) and/or verifying result(s) may include a check of correct creation and storage of log and/or metadata including metadata for de-compiling of machine-readable code.

In order to avoid a manipulation of a converted machine-readable code element, preferably, upon conversion and prior to implementing of the converted machine-readable code element into e.g. the peer-to-peer application, the functionality of the converted machine-readable code element may be verified and validated, respectively, by means of at least one verifying means at least based on the stored function attribute of the human-readable code element. Verification can, in particular, include checking whether the converted machine-readable code element works in accordance with the one or more function attributes associated to the human-readable code element corresponding to said converted machine-readable code element. For instance, a comparison process can be conducted and evaluated. A verification result can include a formal proof(s) and/or behavioral test result(s)

The verifying means can be a part of the peer-to-peer application. Alternatively or additionally, one or more verifying entity(ies) having a peer-to-peer module and one or more verifying means can be provided. As described above, the peer-to-peer module can be used to enable communication between the at least one verifying means and the peer-to-peer application. By providing at least one verifying means configured to automatically verify preferably each converted machine-readable code element, it is not necessary that each participating entity has to individually check the functionality of a converted machine-readable code element.

Further, formal test(s), behavioral test(s), etc. of corresponding machine-readable code element(s) can be stored in the registry storage. It shall be understood that a test can be automated with tool(s). Meta data about these tool(s) may be stored as well. In addition, further data can be stored in the registry storage. E.g. data about the conversion (compiling) process (e.g. operating system, compiler version, complier output logs, hashes of the code elements), and/or data of a further re-conversion (de-compiling) process and/or
storing data about the (automated) verification process (e.g. verification / testing tool, version, used code input data, output logs) can be stored. Proofs about the verification process can be stored in the peer-to-peer application.

According to the method of the present application, verifying the functionality of the machine-readable code element comprises:
- conducting at least one function test process by at least executing the converted machine-readable code element on at least one computing device,
- analyzing the conducted function test process at least based on the stored function attribute, and
- providing a verification result based on the conducted analysis.

In order to evaluate and verify the functionality of the machine-readable code at least one test can be conducted, in particular, prior to the implementation of the machine-readable code element. In particular, function test can be conducted by executing said machine-readable code element e.g. on one or more computing device(s) formed by one or more node(s) of the peer-to-peer network. In particular, at least a part of the nodes of the peer-to-peer network can execute the machine-readable code element for conducting the test process. This enables to analyze function test process by the nodes of the peer-to-peer network, which can monitor the function test process.

Alternatively or additionally, at least one (off-chain) verification entity comprising a peer-to-peer module and at least one verifying means can be provided. The verifying means of said device may be configured to machine-readable code element and to monitor the function test process.

In one embodiment the machine-readable code execution test may be done in a designated test or sandbox environment. This environment may be part of the peer-to-peer application or controlled by the peer-to-peer application.

The one or more function test process(es) can be, in particular, conducted based on at least one predefinable test function setup. Preferably, the at least one predefinable test function setup may be defined by one or more function attribute(s) (indirectly) associated with the machine-readable code element. Alternatively or additionally, respective function test setup(s) can be generally predefined for respective type(s) of code elements by at least a part of the nodes of the peer-to-peer network. Depending on the analysis of the at least one function test process a verification result can be provided. Such an analysis can comprise a comparison of monitored test parameter value(s) and one or more function attribute(s). For instance, a function attribute can be a test parameter data set, wherein said test parameter data set has to be the result if the machine-readable code element works correctly.

Furthermore, according to a further embodiment, providing a verification result based on the conducted analysis may comprise:
- creating a positive verification attribute if the function test process has been conducted in accordance with the stored function attribute, and/or
- creating a negative verification attribute, in particular, a non-verification attribute if the function test procedure has been not conducted in accordance with the stored function attribute.

By creating a positive verification attribute or a negative verification attribute, preferably, each machine-readable code element can be designated as a properly working machine-readable code element or as a non-properly working machine-readable code element.

According to a preferred embodiment of the method according to the present application, the method may further comprise registering a converted machine-readable code element, wherein registering the machine-readable code element may comprise:
- storing at least the created (positive or negative) verification attribute associated with the machine-readable code element by the peer-to-peer application as a part of the registry data set of the corresponding human-readable code element in the registry storage.

Due to the publication of the verification attribute associated with the machine-readable code element by means of the inspectable registry storage, improved security standards can be achieved. In particular, each machine-readable code element can be associated with a positive or negative verification attribute. Preferably, all participating entities can affirm that the one or more machine-readable code element(s) to be used by a participating entity works properly. Preferably, the positive verification attribute can be added to the already stored registering data set. It may be possible that a code identifier is assigned to the machine-readable code element. The identifier may be the same identifier already assigned to the human-readable code element corresponding to said machine-readable code element or further identifier.

In particular, a common registering data set for a machine-readable code element and the corresponding human-readable code element can be generated. It shall be understood that also different identifiers and e.g. two registering data set which might be linked to each other can be provided.

Preferably, all data (e.g. all attributes related to said machine-readable code element and/or said human-readable code element) may be stored in said registry together with said at least one code identifier such that the data is inspectable by at least a part of the participating entities of the peer-to-peer network. Further data can be added to the registering data set, such as creating entity of the code element, compiling entity of the code element, verification entity of the code element, etc. In particular, log data and/or metadata about the creation of the verification attribute and/or input data used for code execution in the process of the creation of a verification attribute and/or relationship(s) among two or more code elements (e.g. tree-like or graph-like structures) can be stored.

The verification and/or registration of a converted machine-readable code element can be automated within a software development and/or deployment process. A software development or deployment tool might have an API to the peer-to-peer network and application, respectively, which orchestrates verification, registering and deployment.

The registry storage can include reputation data that are generated by human or machine users of a code element. A combined score of automated code verification and reputation can be used by human or machine users evaluate a code element (e.g. smart contract) prior to using it. Human or machine users can either be regular users or machine-code certification agencies.

Furthermore, at least the machine-readable code element associated with the verification attribute can be implemented (e.g. into the peer-to-peer application) by storing the machine-readable code element by means of the peer-to-peer application as a sealed machine-readable code element. A sealed machine-readable code element according to the present application is a code element whose code cannot be amended anymore. Storing a code element as a sealed code element, in particular, includes storing said code element in a sealing entity. By way of example, a code can be sealed using techniques of trusted execution environments including secure enclave launch, attestation, provisioning, sealing/unsealing and/or secure software upgrades. A proof of correct execution of the sealing process might be stored in the registry storage.. A subsequent manipulation of an implemented machine-readable code element can be further reduced.

Further, in particular, in order to increase trust in the conversion process, the compiler and verification code itself may undergo the procedures described above: verification, registering, deployment and sealing.

In addition, the hardware of a sealing entity might be registered as a so called smart asset in the peer-to-peer application. The sealing entity (may be in combination with an additional crypto chip) may run a compiler or a verification entity can sign the generated outputs.

According to a further embodiment of the present application, the method may further comprise adapting a reputation attribute of a compiler used for converting the human-readable code element into the machine-readable code element at least based on the verification result. A reputation attribute according to the present application is an indication about the reliability of an entity, in particular, regarding its functioning. While an actually or potentially manipulated or outdated compiler can have a low reputation attribute (e.g. a low value), a non-manipulated compiler may have a higher reputation attribute (e.g. a higher value). Further parameters can be taken into account for rating an entity, such as the prompt (or delayed) execution of a compilation offer, a correct transaction of the offer, etc. Furthermore, in a similar way, the method may further comprise adapting a reputation attribute of a verification entity used for verifying correct functioning of a converted machine-readable code element.

A generated output of a compilation or verification process that was produced by a sealing entity might be signed by a sealing entity. The signature of a sealing entity might further increase a reputation score.

Said reputation attribute might be combined with reputation data that are generated by human and/or machine user(s) of a code element and/or a compiler. A combined score of code verification, registering, deployment, sealing and human/machine reputation feedback can be used by human and or machine user(s) to evaluate a code element (e.g. smart contract) prior to using it.

Preferably, the said reputation attribute of a code element can be changed based on the reputation of a compiler or verification entity. For instance, if it turns out that a registered complier or verification code is malicious, defective and/or inaccurate the reputation score of the complier or verification code can change. As a consequence the reputation score of generated output (i.e. effected machine-readable code) can be (automatically) changed as well.

The peer-to-peer system may comprise at least one further compilation entity and/or converting means implemented in the peer-to-peer application for converting a first human-readable code element comprising human language to a second human-readable code element comprising programming language. The second human-readable code element can then be converted to a machine-readable code element. Such type of compilation entity (or converting means) can be operated in a similar way as the previously type of compilation entity (or converting means).

The peer-to-peer system may also comprise at least one further de-compilation entity and/or re-converting means implemented in the peer-to-peer application for re-converting a second human-readable code element comprising programming language to a first human-readable code element comprising human language. Such type of re-compilation entity (or re-converting means) can be operated in a similar way.

Preferably, also a verifying entity can have a reputation attribute. The peer-to-peer application may be configured to control and monitor a verifying entity. Based on the monitoring results, a reputation attribute can be changed. As described above, further parameters can be taken into account, such as the prompt (or delayed) execution of a test offer, a correct transaction of the offer, etc.

In a further embodiment a sealing entity (e.g. hardware with trusted execution environment) may have a reputation attribute (incl. quality or performance attributes, such as e.g. SLAs such as availability, code execution power, time to deployment, etc.). The peer-to-peer application may be configured to control and monitor a sealing entity. Based on the monitoring results, a reputation attribute can be changed.

It has been found that, in particular, by means of the registry storage, a manipulation of a peer-to-peer application e.g. due to a substitution of an implemented (not manipulated) machine-readable code element by a new (e.g. manipulated) machine-readable code element is detectable. According to a preferred embodiment of the method of the present application, the at least one peer-to-peer application may comprise a plurality of machine-readable code elements. The method may comprise:
- scanning the peer-to-peer application by detecting the identifiers of the implemented machine-readable code elements, and
- detecting a newly implemented machine-readable code element by comparing the detected identifiers with the identifiers stored in the registry storage.

For instance, the peer-to-peer application can comprise a scanning means configured to conduct a scanning step e.g. at regularly and/or at predefinable time intervals. The scanning step, preferably, includes detecting all identifiers of all machine-readable code elements implemented in the at least one peer-to-peer application. The detected identifiers can be, in particular, code identifiers, as described hereinbefore. For instance, the unique communication address and/or the unique hash value of a machine-readable code element can be detected as the at least one identifier. It shall be understood that per machine-readable code element, two or more identifiers and/or further data related to said machine-readable code element can be detected during a scanning step. In one embodiment, all identifiers detected during a scanning step can be (intermediately) stored by the peer-to-peer application e.g. in the peer-to-peer application and/or a storage arrangement controlled by the peer-to-peer application.

Upon detection of the at least one identifier of the at least one implemented machine-readable code, the detected (code) identifier can be compared with the registered code identifiers of the registry storage. Alternatively or additionally, the detected (code) identifier can be compared with the at least one code identifier detected in a previous scanning step. Based on the comparison result, it can be followed whether a detected (code) identifier belongs to a newly implemented machine-readable code element (if there is no match between detected identifier and stored identifiers) or to an already implemented machine-readable code element (if the identifier corresponds to one of the stored identifiers). If the detected (code) identifier belongs to a newly implemented machine-readable code element it can be followed that said machine-readable code element might be an actually or potentially manipulated machine-readable code element. In particular, this method also enables to detect any changes regarding tree-like or graph-like code structures. A substitution of a (sub-)machine-readable code element is now detectable. It shall be understood that this might include on-chain and off-chain code elements.

Furthermore, a newly implemented machine-readable code element can be detected by detecting change(s) in stored relationship(s) among at least two code elements (e.g. a pointer in a machine-readable code element is now pointing to a new machine-readable code element).

Further, a regular scanning and/or analysis can be conducted.

According to a further embodiment of the application, upon detection of an implemented machine-readable code element which is, in particular, not registered in the registry storage, at least one of the following actions can be at least initiated by the peer-to-peer application:
- blocking the execution of the detected machine-readable code element at least until the functioning of said machine-readable code element is verified (e.g. as described above), and
- informing at least a part of the participating entities about the detected machine-readable code element (e.g. by sending a message to said participating entities).

In addition, the method can comprise analyzing the detected code element in accordance to registered attribute(s) and e.g. generating a reputation score, and/or storing the newly detected code element and/or the information derived from an analysis in the registry storage.

It shall be understood that participating entities might have an algorithm that stops execution of code elements that are new, changed, that have a low reputation score and/or that were generated by a compiler and/or verification entity that has now a lower reputation score.

In case of a drop in reputation of a code element a participating entity might automatically search the register based on the attribute(s) for alternative code elements and automatically replace the code element(s).

In case of a drop in the reputation of a compiler and/or verification entity a participating entities might automatically search for compiler and/or verification entity with a high reputation score and regenerate and deploy new machine-readable code (e.g. in order to avoid risks in accordance to newly discovered malicious or defective compiler / verification code).

Furthermore, according to an embodiment of the method, a searching means configured to search at least one desired code element may be provided. For instance, by means of a peer-to-peer module a searching means e.g. of the peer-to-peer application can be triggered in order to look for one or more definable code element(s). By way of example, a peer-to-peer module can transmit a search request message comprising a search data set which defines the item(s), in particular, code elements (with required function attributes) to be searched. Upon receipt of such a request by the peer-to-peer application, the at least one searching means may process the received search data set and will start to search for the desired item(s) within the at least one peer-to-peer application, preferably, by means of the registry storage. Upon completion of the search process, the searching means may provide a search result. For instance, the search result can be read out at least by the requesting peer-to-peer module and/or a response message can be transmitted at least by the requesting peer-to-peer module. The provision of a searching means or tool configured to search an item (e.g. code element) of at least one peer-to-peer application is independently new and inventive.

The searching means may provide a smart contract search functionality for (on- and off-chain) machine-readable code elements.

In a further embodiment this search function can be used by an entity (user, machine) to find smart contracts with required
- function attribute(s), and / or
- reputation score(s), and / or
- code execution parameter(s) (such as technical, social, environmental, market or economic parameter(s)).

A code execution parameter might not be stored in a machine-readable code element. The machine readable code element can either be connected to a data feed (so called smart oracle) or to an execution parameter registry. For instance, machine-readable code element can control exchange of physical parameters (such as energy transfer) and/or financial values. An energy unit price tariff table might by dynamic and depend on time. A seller entity might offer a buyer entity energy via a machine-readable code element in accordance to a (dynamic) tariff table. The specific tariff table that is used for the respective offer to the buyer entity may be (immutably) stored (and hashed and/or signed by the selling entity and/or the buying entity) in the peer-to-peer application. The machine readable code element may provide a proof mechanism to the buying entity that the (ID of the) agreed upon tariff table is used for the transaction from seller to buyer of energy.

Code execution parameter(s) can be stored in a registry database including attributes, meta data and a link to a code element or a smart contract. For proper functioning of the link between code execution parameter(s) and a smart contract a proof may be provided by a verification means.

A search request might analyze function attributes, reputation scores and/or code execution parameters that are already stored in the registry database. Code execution parameter(s) can be dynamically generated by a selling entity or the respective machine-readable code element.

In a further embodiment a dynamic search function can be realized. In a first step the search function may identify a list of machine-readable code element(s) (e.g. smart contracts) that fulfill requirement(s) such as function attribute(s) and/or reputation score(s) and/or other registered attribute(s) (e.g. geography of a physical entity). In a further step the dynamic search function may send a dynamic execution parameter definition request and, in particular, a set of input parameter(s) (e.g. usage parameters) to the list of machine-readable code element(s) that were identified in the previous step. The machine-readable code element(s) may answer the request by providing a dynamic execution parameter response and, in particular, a dynamic execution parameter definition request ID. This response and e.g. the ID may be stored in the peer-to-peer application. It shall be understood that further parameter(s) can be returned as well (e.g. expiration time of a response).

Based on the search result(s) and/or the search algorithm(s), the responses can be ranked. A buying entity can e.g. automatically decide which selling entity has the best offer based on the search result(s). The buying entity can initiate a transaction agreement with the preferred machine-readable code element(s) of a selling entity e.g. based on pre-defined dynamic execution parameter response ID. These pre-defined parameter(s) may be automatically used by the machine-readable code element(s). The use of the dynamic execution parameter response ID in the machine-readable code element(s) can be a verified attribute of the machine-readable code.

With this process a buying entity can automatically contract a selling entity based on dynamic terms that are predefined and immutable prior to the transaction.

Example of a dynamic search function' use case include:
- Electric vehicle wants to contract a charging pole in a specific geofence
- Electric vehicle searches for smart contract of charging poles in accordance to specific attributes (geofence, charging load attributes, other)
- List of charging poles is returned.
- Search functions send a price quote (dynamic execution parameter definition request) to all identified or a number of highest ranked smart contracts
- Tariff tables are generated based on actual market conditions (e.g. state of the energy grid, dynamic grid distribution prices, dynamic energy prices) by the smart contracts (or the smart contract triggers a central service that provides the quote)
- Price quotes (including an ID) in form of a tariff table are stored in the peer-to-peer application.
- Smart contracts are ranked by analyzing the output of the search function and considering further parameters (such as distance to the charging pole, minimal or maximal duration of te charging process, etc.).
- Electric vehicle decides to accept the highest ranked offer and sends a transaction agreement request to the smart contract of the charging pole with the best offer.
- Transaction agreement includes the ID of the respective price quote.
- Smart contract automatically uses the terms of the respective ID for the price quote and / or the respective dynamic execution parameters for code execution.

Furthermore, transaction agreement(s) can be generated by the peer-to-peer application. Examples of a transaction agreement may be a compilation or conversion transaction agreement and a verification transaction agreement. An agreement may be generated between two participating entities e.g. about the conversion of a human-readable code element or a verification of a (converted) machine-readable code element.

The peer-to-peer application may be configured to store a generated transaction agreement. A transaction agreement may be a smart contract. The defined process, such as a verification process (e.g. function test process) or a conversion process can be defined and stored within the respective transaction agreement.

The generation of a transaction agreement can be caused or initiated by at least one peer-to-peer module, such as a peer-to-peer module of a creating entity, for example, by transmitting a request message comprising at least one instruction on the generation of a conversion transaction agreement. For instance, the request message may be sent by the peer-to-peer module in order to cause the conversion of a human-readable code element to a machine-readable code element by a compiler provided by a compilation entity or by the peer-to-peer application. A similar request can be sent in order to verify a machine-readable code element by a verifying means provided by a verification entity or the peer-to-peer application.

In particular, a suitable code and, where necessary, at least one key (e.g. signature or hash) for verifying the sender of a message (e.g. sending peer-to-peer module and/or assigned entity) and/or the authenticity of a message can be transmitted to the peer-to-peer application or written in the peer-to-peer application by the peer-to-peer module. A transaction agreement may be generated between two or more entities. Preferably following a confirmation message from the (other) provider entity (e.g. of the compiler or verifying means) comprising a suitable instruction and, where necessary, at least one key (e.g. signature) for verifying the sender of the confirmation message, a corresponding transaction agreement can be advantageously generated following a check by the peer-to-peer network of the peer-to-peer application. Expressed in simple terms, each entity can search for one or a plurality of suitable partners by means of the peer-to-peer network or the peer-to-peer application and a transaction agreement can be generated by means of the peer-to-peer application.

It is noted that each message (e.g. including a search request message) sent in a peer-to-peer application can be checked prior to processing said message, as described above.

According to a preferred embodiment, a generated compilation transaction agreement may comprise technical details about the conversion process. In particular, a compilation or conversion transaction agreement may comprise at least one of:
- conversion criterion,
- identifiers of involved entities and/or compilers,
- compiling algorithm(s),
- compiler entity set-up,
- compiler entity version, and
- registration attribute(s) or requirement(s).

In a similar way, a verification transaction agreement can be generated, which may comprise similar details, such as verification criterion, identifiers of involved entities and/or verifying means, function test setups, function attributes, etc.

In a further similar way, a deployment and/or sealing transaction agreement can be generated, which may comprise similar details such as sealing requirements, scheduled time of the deployment verification results, registration requirements including searchable attributes, etc.

It may be possible that in return to a conduction of a conversion process or verification process, the entity which desires to use said compiler or verifying means has to fulfill one or more criterion(s) defined in the respective transaction agreement. According to one embodiment, the peer-to-peer application may be configured to cause the conduction of an conversion or verification criterion transaction based on at least one conversion or verification criterion of the stored transaction agreement, preferably, stored in the peer-to-peer application. For instance, the conversion or verification criterion may be a financial value. Financial values can be (instantaneously) exchanged with a transaction via a cryptocurrency. Escrow functionality can be used to mitigate credit risk of transactions. In an alternative or additional embodiment micropayment channels may be used for a (constant) payment stream that can be handled e.g. partly off-chain to reduce the amount of on-chain transactions. In a further embodiment so called state channels or state networks (e.g. Raiden Network, Lightning Network) may be used to exchange digital tokens off-chain in a secure way. Opening and/or closing of state channels may be registered on the peer-to-peer application. This means that individual transactions may not be stored on the peer-to-peer application in order to improve scalability and avoid movement tracking of pseudonyms on the peer-to-peer application. In an embodiment, advanced cryptographic methods may be used to enable anonymous transactions (e.g. zk Proof Systems, Ring Signatures, Mixers, HD Wallets). According to the present invention, a man-in-the-middle is not necessary. Fully automated processes from authentication to charging and billing can be provided.

According to a further preferred embodiment, the at least one peer-to-peer application can be a decentralized register, distributed ledger or a shared database configured to store data, e.g. conversion or verification transaction agreement(s), (code) identifier(s), registering data set(s), etc., with given certain proofs or signatures. In addition to e.g. (code) identifiers, the decentral register can store computer code in form of machine-readable code elements. In particular, a machine-readable code element can be invoked by a transaction to the (unique) communication address of the machine-readable code element in so called 'smart contracts'. This machine-readable code element can be processed on the plurality of node(s) of the peer-to-peer network.

It shall be understood that machine-readable code elements (e.g. smart contracts) or processing logic might be stored and executed in so called 'crypto conditions' of the Interledger protocol (ILP). This means that not necessarily all code must be stored in a smart contract such as Ethereum smart contract.

In a further embodiment, the machine-readable code element (smart contract) might be stored and executed on a decentral computation market (e.g. Ethereum Computation Market, Trubit, Golem, Cryplets Microsoft).

In a further embodiment, machine-readable code elements of an external computing device controlled by the peer-to-peer application may include algorithm(s) for de-central cognitive analytics, artificial intelligence or machine learning. Analytics and learning can be shared with other entities can be shared, aggregated and further analyzed via the peer-to-peer application(s).

A decentralized register can be readable at least by a part of the participating entities (participants) of the peer-to-peer network. In particular, every computer node and each registered entity (by means of the respective peer-to-peer module) can comprise the peer-to-peer application. The decentralized register, at least the public part (i.e. may be without private contracts) may be read at least by each participant of the peer-to-peer network. In particular, all peer-to-peer modules and all other computers of the peer-to-peer network can preferably read all information in the peer-to-peer application formed as a register. Preference is also that all peer-to-peer modules and all other computers of the peer-to-peer network can send messages to or write messages to the peer-to-peer application. A message or transaction sent to a machine-readable code element (e.g. smart contract) may start the execution of a code of the machine-readable code element (e.g. registration means, conversion or verifying means, searching means, etc.) while using data stored in the machine-readable code element. For instance, sending a search request to a searching means may start the execution of the code resulting in e.g. conducting a search process, as described hereinbefore.

The peer-to-peer application might be built upon the following elements: peer-to-peer network comprising Consensus System/Protocol, Data Structure, Merkle Trees, Public Key Signatures and/or Byzantine Fault Tolerance. It may replicate data based on a consensus principle. It may be auditable and traceable.

In a simple way information can be made available to preferably all participants. This may allow to carry out a review of the information stored in the decentral register or the code executed in the decentral register. Particularly preferably, each computer (node) in the peer-to-peer network can be configured to review new information, in particular, based on older information stored in the peer-to-peer application. In addition, the at least one conversion or verification controlling means may be monitored by at least a part of the nodes of the peer-to-peer network, preferably by all nodes. A manipulation of a an implemented machine-readable code element can thus be prevented, at least detected.

Moreover, at least a plurality of nodes, preferably each node can in each case comprise the complete data content, but include at least a portion of the data contents of the peer-to-peer application, in particular, of the decentral register. For example, it may be provided that after a positive verification of written information or e.g. a positive registration in the peer-to-peer application this information is saved by all nodes, at least by a part of the nodes. For instance, after the generation of a conversion or verification transaction agreement and/or after a successful registration, the agreement and (new) identifier, respectively, can be stored at least by a part, preferably all nodes of the peer-to-peer network. The tamper resistance of the data stored in the peer-to-peer application can thereby be further improved. A conversion or verification action or conversion or verification criterion transaction can be securely controlled.

In order to store new information in a tamper-proof way, the peer-to-peer application can comprise encryption means and/or signature means and/or verifying means, wherein at least one of the encryption means and/or signature means and/or verifying means is configured to store data, such as a conversion or verification transaction agreement (s), (code) identifier(s), registering data set(s), etc. In particular, it can be provided that by the hash function a link is established with at least one previously stored information in the decentral register. Further data, such as request messages, ordinary, contextual and/or transaction data of an entity, such as a provider entity, can be stored.

The peer-to-peer application may be formed by a Directed Acyclic Graph (DAG). A directed acyclic graph, such as IOTA or Tangle, means that blocks (or nodes of the graph) are coupled to each other via directed edges. Thereby, direct means that the (all) edges have (always) a same direction similar to time. In other words, it is not possible to step back. Eventually, acyclic means that loops do not exist.

In a particularly preferred embodiment of the present system, the peer-to-peer application can be a block chain or decentral ledger comprising at least two blocks coupled to each other (e.g. Ethereum Block chain with Smart Contracts). The block chain technology or "decentral ledger technology" is already used in the payment by means of a crypto currency, such as Bitcoin.

In addition, the block chain can be used to generate predefined action(s) caused by at least one peer-to-peer module and/or a previously described means (machine-readable code element) in a tamper-proof manner. The block chain according to the present embodiment, is particularly a decentralized, peer-to-peer-based register in which all data related to at least one conversion or verification process can be logged. A block chain is particularly suitable as a technical means to replace a central entity/server in a simple and secure manner.

In further embodiments of the peer-to-peer application, the block chain can be a permissionless or permissioned block chain. In a specific case, the block chain can be public, consortium or private block chain.

In a further embodiment, the peer-to-peer application can be formed by multiple block chains which are connected via mechanisms such as side chains or smart contracts. A peer-to-peer node can run one or more different block chain client (s).

Data of the peer-to-peer application can be stored on the "decentral ledger technology" and/or the decentral ledger steers (encrypted) data storage accessible via the internet and preferably in de-central data storage, object store and database, respectively, such as Interplanetary File System (IPFS) or storj or in a distributed Blockchain database (e.g. BigChainDB). Access to encrypted data to third party entities is managed via the permission means formed as one or more smart contract(s) on the block chain.

In addition, data feeds can be provided by the peer-to-peer application (so called "smart oracles"). Data feeds can provide further data relating to a conversion or verification action from at least one further source. Data can be captured from trusted sources off-chain and stored on the block chain or stored via the block chain on a decentral data storage entity.

Information among peer-nodes can be exchanged by a peer-to-peer messaging system. This means a peer node can send a message to another peer node to submit an information or to trigger an action. Messages can be clear text, signed, hashed, time-stamped and/or encrypted. This means that not all data exchanged among peer nodes must be stored on the block chain.

In a further embodiment, the at least one peer-to-peer system can be formed by a plurality of (computer) nodes of a peer-to-peer network and peer-to-peer module(s), such as a peer-to-peer module of a compilation entity, a peer-to-peer module of a creating entity, a peer-to-peer module of a verification entity, etc. A peer-to-peer module may be only configured to communicate with the plurality of computer nodes. In other words, the peer-to-peer module is not a computer node of the peer-to-peer network but only a participant or participating entity. Such a peer-to-peer module does not comprise the peer-to-peer application but only provides an interface module, such as an application programming interface (API), and a decentral application for communication with the computer nodes of the peer-to-peer network or the peer-to-peer application, such as a block chain or a smart contract on the block chain. For instance, such a peer-to-peer module can either send clear text or encrypted information or generate a secure connection (e.g. tunnel) to a peer-to-peer gateway (or so called "remote node") in order to communicate with the peer-to-peer network. This allows reducing the required processing power of the peer-to-peer module.

In one implementation of the peer-to-peer network, there can be only one validating peer or full node, e.g. only one node can be configured to perform a validation process, e.g. conducting a conversion or verification action, and one or more observing (or monitoring) nodes. An observing node can validate transactions to establish a trust level but does not validate all transactions which is done by the validating peer.

In a further embodiment, the peer-to-peer module is one of the nodes. In this case, the peer-to-peer module comprises at least a part of the peer-to-peer application. In particular, the peer-to-peer module can comprise preferably the total data content of the peer-to-peer application or can access the information stored in another node. For instance, the peer-to-peer module might be a so called "light node" or a decentral application (DAPP) connected to a remote node.

It is noted that in the present case, according to an embodiment, the peer-to-peer module comprises at least an API configured to communicate with the peer-to-peer application, such as the block chain. In addition to the API, the peer-to-peer module comprises a decentral application of software comprising local algorithms at least configured to create and transmit data, such as charging data set(s), authentication result(s), grid status data set(s), to the peer-to-peer application via the API. The decentral application so called "Dapp" is at least configured to process and transmit said data.

Preferably, data and messages are signed or encrypted or can be transmitted via a cryptographically secured tunnel or a secured internet connection to a peer-to-peer node running the peer-to-peer application, such as the block chain. In another particular embodiment, also the peer-to-peer application itself is implemented in the peer-to-peer module, i.e. the peer-to-peer module is a node of the peer-to-peer network comprising the decentral application, the API and the peer-to-peer application, such as the block chain or decentral ledger.

Data and transactions stored on the block chain do not provide "transactional privacy". Transactions between pseudonyms may be (often) stored in clear text on the block chain. In some cases data stored on the block chain are encrypted and the keys may be handled via the block chain. Transactions between pseudonyms are stored in clear text on the block chain. Privacy preserving, secure transactions or execution of computer code can be achieved with cryptographic tools, such as zero knowledge (zk) proofs or zk Succinct Non-interactive Arguments (zk-SNARK). Transactions or algorithms are separated into two parts: a machine-readable code element (e.g. a smart contract) on the block chain and a machine-readable code element (e.g. a private contract). A privacy preserving protocol ensures the privacy of data and the correctness of code execution (SNARK verification is done via the smart contract on chain). The private contract computation can be done by a set of nodes, off-chain computers or done in measured launch environment or a secure hardware enclave for attestation and sealing that cannot be manipulated by other software code running on the devices. In an alternative embodiment, secure Multi-Party-Computing (sMPC) systems can be used for transactional privacy. Examples for privacy preserving protocols and computation are HAWK and MIT Enigma.

With zero knowledge proof (zk Proofs) the parties can see that the algorithm is executed correctly in a private contract, but the input data are not disclosed to the party, zk Proofs may be stored in and/or validated by the peer-to-peer application. In addition, selective privacy can be achieved by sharing keys to decrypt transactions for reporting and auditing purposes.

To securely deploy a machine-readable code element and or data into a device a trusted execution environment such as Intel SGX or TPM or Direct Anonymous Attestation module can be integrated with a peer-to-peer module.

Similarly, in a further embodiment, a particularly large peer-to-peer network may be divided in two or more (physical or logical or dynamically virtual) cluster(s). In a corresponding peer-to-peer network, for example, a validation (of a subset of transactions) may only be carried out by the members of one cluster (a subset of nodes; e.g. sharding of a block chain to improve the scalability). In a further embodiment the peer-to-peer application can be formed using multiple block chains. These block chains are connected via frameworks such as sidechains or smart contracts or interledger protocol.

A further aspect of the invention is a peer-to-peer system according to claim 10. The peer-to-peer system comprises at least one peer-to-peer network having at least one peer-to-peer application. The peer-to-peer system comprises at least one registry storage at least controllable by the peer-to-peer application. At least one code identifier assigned to at least one human-readable code element and at least one function attribute associated with the human-readable code element is stored as a registering data set by the peer-to-peer application in the registry storage inspectable by at least a part of the participating entities of the peer-to-peer network.

In particular, the previously described method can be used for operating the peer-to-peer system. Preferably, at least one storage arrangement comprising the at least one registry storage is provided. The storage arrangement may be controllable by the peer-to-peer application. Controlling means, in particular, that reading of stored data (e.g. registering data set(s)) and writing of data (e.g. newly storing of a registering data said or adding of further data to a registering data set) into said storage arrangement is controlled by the peer-to-peer application. Preferably, the storage arrangement can be formed as a de-central data storage, object store and database, respectively, such as Interplanetary File System (IPFS) or storj or in a distributed Blockchain database (e.g. BigChainDB).

A still further aspect of the present application is a peer-to-peer application according to claim 11. The peer-to-peer application comprises at least one code identifier generating means at least configured to assign a code identifier to at least one provided human-readable code element. The peer-to-peer application comprises at least one storing means configured to store at least the code identifier of the human-readable code element and at least one function attribute associated with the human-readable code element as a registering data set in at least one registry storage inspectable by at least a part of the participating entities of the peer-to-peer network.

The peer-to-peer application can be a computer program comprising computer code executable on node(s) of a peer-to-peer network in order to conduct the above described method.

A further aspect of the present invention is a verification entity according to claim 12 for use, in particular, in a previously described peer-to-peer system. The verification entity comprises at least one peer-to-peer module at least configured to receive a machine-readable code element and at least one associated function attribute from at least one peer-to-peer application of at least one peer-to-peer network. The verification entity comprises at least one verifying means configured to verify the functionality of the received machine-readable code element at least based on the received function attribute.

The verification entity can be a computing device, such as a computer, mobile phone, home controller, or the like. As described hereinbefore, a peer-to-peer module can be integrated in the computing device. Further, at least one verifying means configured to verify the functionality of the received machine-readable code element at least based on the received function attribute. Upon receipt of e.g. a (previously verified) message comprising at least a machine-readable code element to be verified and at least one associated function attribute, the verifying means can be operated, as described hereinbefore. The function attribute can be indirectly associated to the machine-readable code via the corresponding human-readable code element. A verification result can be provided by the peer-to-peer module to the peer-to-peer application. The peer-to-peer application can be configured to at least monitor the verification entity.

Further, a compiling entity is disclosed comprising at least one peer-to-peer module at least configured to receive a human-readable code element from at least one peer-to-peer application of at least one peer-to-peer network and at least one converting means configured to convert the human-readable code element into at least one machine-readable code element implementable at least in a peer-to-peer application.

Further, a sealing entity is disclosed comprising at least one peer-to-peer module at least configured to receive a converted machine-readable code element having a positive verification attribute from at least one peer-to-peer application of at least one peer-to-peer network and at least one storing means configured to the received machine-readable code element as a sealed machine-readable code element.

Generally, a module or means can be formed by software and/or hardware. An entity can comprise hardware (processor, memory, etc.) and/or software (operating system, etc.).

The features of the methods, systems, modules, peer-to-peer applications, computing devices and computer programs can be freely combined with one another. In particular, features of the description and/or the dependent claims, even when the features of the dependent claims are completely or partially avoided, may be independently inventive in isolation or freely combinable with one another.

These and other aspects of the present patent application become apparent from and will be elucidated with reference to the following figures. The features of the present application and of its exemplary embodiments as presented above are understood to be disclosed also in all possible combinations with each other.

In the figures show:
- Fig. 1: a schematic view of an embodiment of a peer-to-peer system according to the present application;
- Fig. 2: a schematic view of an embodiment of a peer-to-peer application according to the present application;
- Fig. 3: a schematic view of a further embodiment of a peer-to-peer system according to the present application;
- Fig. 4: a schematic diagram of an embodiment of a method according to the present application;
- Fig. 5: a schematic diagram of a further embodiment of a method according to the present application;
- Fig. 6: a schematic diagram of a further embodiment of a method according to the present application; and
- Fig. 7: a schematic diagram of a further embodiment of a method according to the present application

Like reference numerals in different figures indicate like elements.

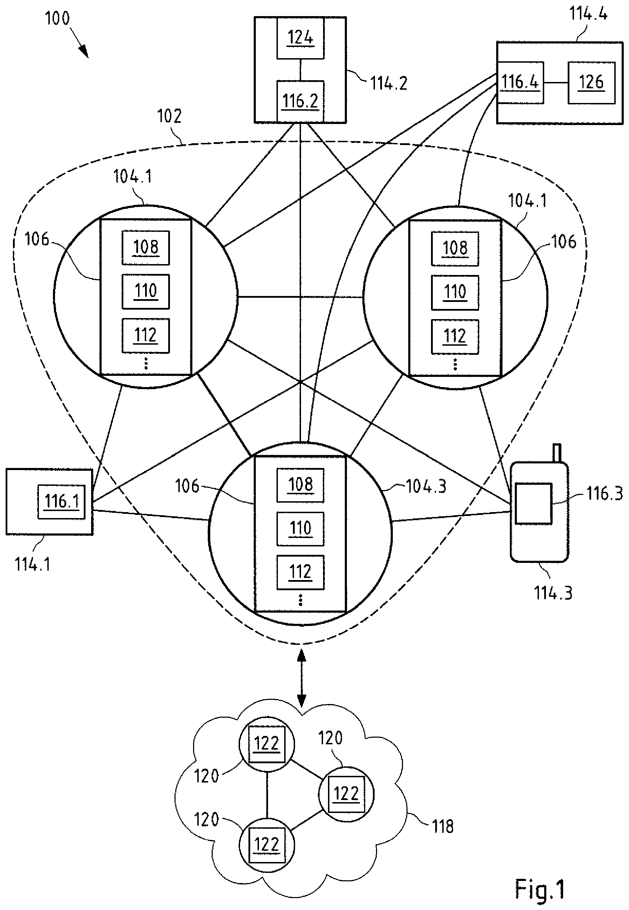

Figure 1 shows a schematic view of an embodiment of a peer-to-peer system 100 according to the present application. The peer-to-peer system 100 comprises a peer-to-peer network 102. The depicted peer-to-peer network 102 comprises three nodes 104.1, 104.2, 104.3 and computers 104.1, 104.2, 104.3, respectively. It shall be understood that a peer-to-peer network can comprise four or more nodes.

The depicted nodes 104.1, 104.2, 104.3 (each) comprise a peer-to-peer application 106. As can be seen from figure 1, the same peer-to-peer application 106 is preferably implemented on each node 104.1, 104.2, 104.3. This means, in particular, that the same content is comprised on each node 104.1, 104.2, 104.3 and that the same code, in particular, the same machine-readable code elements 108, 110, 112 can be executed on each node 104.1, 104.2, 104.3.

The peer-to-peer application 106 may, preferably, be a public register 106 or a decentral ledger 106 that can, in particular, be inspected by all participants 104.1, 104.2, 104.3, 114.1, 114.2, 114.3, 114.4 (not only the nodes 104.1, 104.2, 104.3) of the peer-to-peer network 102. Each node 104.1, 104.2, 104.3 preferably has the (entire) public register 106. It may also be envisaged that only part of the register can be provided on a node (light node). In a particularly preferred embodiment, the peer-to-peer application 106 may be a block chain 106 which will be explained in more details hereinafter. It shall be understood that the peer-to-peer network may comprise further nodes. In addition, it shall be understood that also a gateway device can be formed as a node of the peer-to-peer network.

As can be seen from figure 1, all nodes 104.1, 104.2, 104.3 are connected to each other via communication connections. For instance, at least one physical standard network (wired and/or wireless) can be used for connection. For communicating via the at least one physical standard network suitable transceiver modules may be arranged in the respective entities/devices.

Besides the nodes 104.1, 104.2, 104.3 of the peer-to-peer network 102, the peer-to-peer system 100 comprises further participating entities 114.1, 114.2, 114.3, 114.4 in form of computing devices 114.1, 114.2, 114.3, 114.4. Each of said depicted computing devices 114.1, 114.2, 114.3, 114.4 comprises a peer-to-peer module 116.1, 116.2, 116.3, 116.4. It shall be understood that the depicted participating entities 114.1, 114.2, 114.3, 114.4 are only examples for generally possible participating entities 114.1, 114.2, 114.3, 114.4. There may be more or less participating entities.

A first participating entity 114.1 may be a creating entity 114.1. A creating entity 114.1 may be configured to generate and provide one or more human-readable code element(s). The creating entity 114.1 may associate one or more function attribute(s) to said human-readable code element. The human-readable code element together with the function attribute(s) can be provided by the peer-to-peer module 116.1 to the peer-to-peer application 106.

A further participating entity 114.2 may be a conversion or compilation entity 114.2. The conversion entity 114.2 may comprise at least one compiler 124. The compiler 124 may be configured to convert a provided human-readable code element into a machine-readable code element. For instance, a creating entity 114.1 and a compilation entity 114.2 may cause the generation of a conversion transaction agreement about the details of the conversion process of a human-readable code element provided by the creating entity 114.1 into a machine-readable code element. The peer-to-peer application 106 can generate the conversion transaction agreement. Further, the peer-to-peer application 106 can be configured to transmit a human-readable code element provided by the creating entity 114.1 to the compilation entity 114.2.

A further participating entity 114.4 may be verification entity 114.4. The verification entity 114.4 comprises at least one verifying means 126. For instance, the peer-to-peer application can provide a converted machine-readable code element (prior to its implementation) to the verifying means 126 via the peer-to-peer module 116.4 of the verification entity 114.4. As will be described hereinafter, the verifying means 126 may be configured to verify or validate the (proper) functionality of the converted machine-readable code element at least based on the function attribute indirectly associated with the human-readable code element corresponding to said machine-readable code element. At least a verification result can be provided from the peer-to-peer module 116.4 to the peer-to-peer application 106.

Eventually, a further participating entity 114.3 may be a mobile phone 114.3 comprising a peer-to-peer module 116.3 e.g. to read the content of the peer-to-peer application 106 or to use a service offered by the peer-to-peer application 106 by means of a machine-readable code elements.

Furthermore, the peer-to-peer application 106 can comprise a plurality of machine-readable code elements 108, 110, 112. For instance, an assigning means 108, a storing means 110 and a converting means 112 can be provided. The assigning means 108 or code identifier generating means 108 may be configured to (generate and) assign a code identifier to a human-readable code element provided e.g. by a creating entity 114.1. The storing means 110 may be configured to store a registering data set of the human-readable code element comprising at least the assigned code identifier and the at least one function attribute into a registry storage 122.

In the depicted embodiment, a storage arrangement 118 comprising the registry storage 122 is provided. The storage arrangement 118 is controlled by the peer-to-peer application 106, in particular, by the storing means 110. Preferably, the storage arrangement 118 comprising a plurality of decentral storage units 120 may be formed as a decentral file system (such as IPFS) or a decentral object store (such as storj) or a decentral distributed database (such as BigchainDB) controlled by the peer-to-peer application 106.

The provided converting means 112 may be an alternative compiler 112 to the compiler 124.

The functioning and operation of the peer-to-peer system 100, peer-to-peer application 106 and verification entity 114.4 will be explained hereinafter in more details.

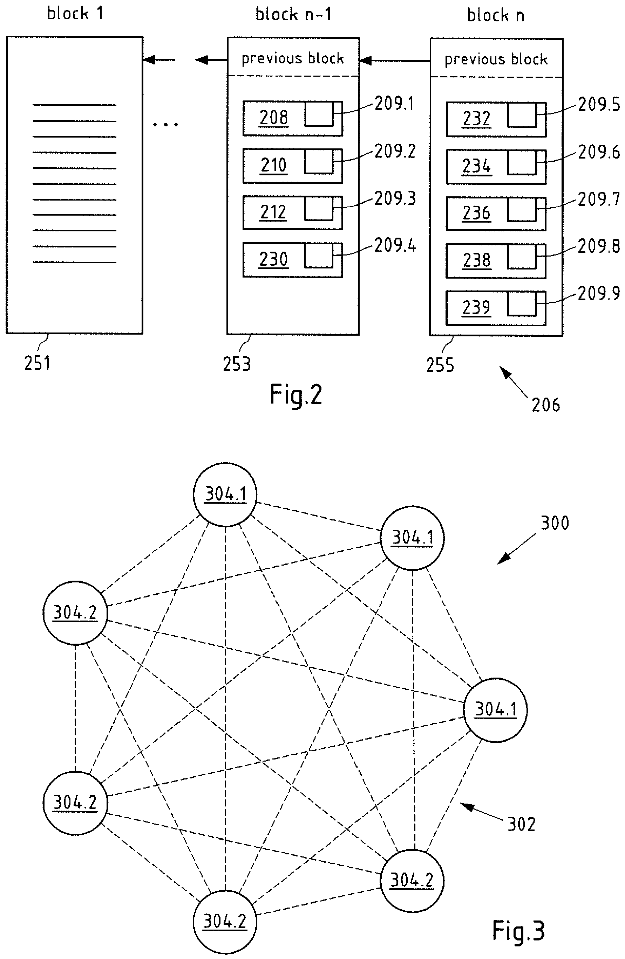

Figure 2 shows a schematic view of an embodiment of a peer-to-peer application 206 according to the present application.

The depicted peer-to-peer application 206 is a register or distributed ledger readable, in particular, by the participating entities (participants) of the peer-to-peer network. Thereby, data set(s) e.g. in form of messages can be written and/or read into/from the register 206 by a peer-to-peer module e.g. to a creating entity, conversion entity, verification entity and/or any other participants in the peer-to-peer network. In a preferred embodiment, the peer-to-peer application 206 may be a block chain 206.

Hereinafter, it is assumed in the following description of the present embodiment that the at least one peer-to-peer application 206 is a block chain 206. However, the following remarks can be easily transferred to other peer-to-peer applications, such as a Directed Acyclic Graph (DAG). A directed acyclic graph, such as IOTA or Tangle, means that blocks (or nodes of the graph) are coupled to each other via directed edges. Thereby, direct means that the (all) edges have (always) a same direction similar to time. In other words, it is not possible to step back. Eventually, acyclic means that loops do not exist.

In further embodiments of the peer-to-peer application, the block chain can be a permissionless or permissioned block chain. In a specific case the block chain can be public, consortium or private block chain.

In a further embodiment, the peer-to-peer application can be formed with multiple block chains which are connected via mechanisms such as side chains or smart contracts. Interoperability among block chains can be established.

The block chain 206 is formed by at least one block 251, 253, 255, preferably by a plurality of interconnected blocks 251, 253, 255. The first block 251 may also be called genesis block 251. As can be seen, a block 253, 255 (except for the first block 251) refers to each previous block 251, 253. A new block can be created by a computationally intensive process (for example, so called "mining" or through another appropriate process, such as voting) and will be particularly provided to all participants of the peer-to-peer network. In a further embodiment a (centrally controlled) master or a set of master nodes may be configured to create new blocks and/or validating transactions. All other nodes can be validation nodes only.

The present block chain 206 is particularly adapted to receive messages, such as messages comprising human-readable code element(s), function attribute(s) and/or registering data set(s), verification result(s), etc., from a peer-to-peer module of a previously described participating entity of the peer-to-peer network. Further, the block chain 206 is particularly adapted to save these messages in the block chain 206. Furthermore, the block chain 206 is configured to generate messages e.g. based on a registering, conversion or verification process/action and/or caused by a peer-to-peer module and/or the execution of a machine-readable code element. In particular, the block chain 206 is at least configured to control and manage a peer-to-peer system, such as shown in figure 1.

In particular, a (newly) received message can be saved and published in the current block 255 of the block chain 206. Due to the configuration of a block chain 206 as a public register 206, said data message of e.g. a peer-to-peer module can be read by preferably all participants of the peer-to-peer network. Alternatively or additionally, data of a message may be stored on a decentral file service or distributed block chain database controlled by the block chain 206, as described hereinbefore.

As already described, in the present block chain 206 different types of messages and data sets, respectively, for example, within a machine-readable code element (smart contract, i.e. an algorithm and/or storage at the block chain 206) can be processed and/or stored. In the present example, the block chain 206 comprises an assigning means 208 in form of a smart contract 208, a storing means 210 in form of a smart contract 210, a converting means 212 in form of a smart contract 212, a verifying means 230 in form of a smart contract 230, a scanning means 232 in form of a smart contract 232, a comparing means 234 in form of a smart contract 234 and a searching means 236 in form of a smart contract 236. Further, an execution parameter registry 238 and a sealing entity registry 240 can be provided. Each of said machine-readable code elements 208 to 236 comprises a (unique) code identifier 209.1 to 209.9, e.g. a communication address.

Furthermore, in the block chain 206 one or more conversion transaction agreement(s) and/or one or more verification transaction agreement(s) may be stored. A conversion transaction agreement may be generated between two (or more) participating entities in order to define the details of conversion process(es). An example of a generation of such a conversion transaction agreement will be described in the following:
A conversion transaction agreement may comprise at least one of the following data:

| | |
|---|---|
| Identifier(s): | One or more identifier(s) of the involved entities, such as identifier of the creating entity and identifier of the conversion entity |
| Code element: | Human-readable code element to be converted |
| Conversion criterion: | Criterion that must be fulfilled for conducting a conversion process |
| Conversion detail(s): | Detail(s) about conversion/compilation process(es) (e.g. converting algorithm(s), time frame(s), etc.) |

The conversion criterion may be e.g. an amount of cryptocurrency e.g. per conversion process which has to be transferred prior to, during and/or after the conversion process. Preferably, at least a part of the agreed amount of cryptocurrency can be locked by the peer-to-peer application 206 prior to a conversion process. In an embodiment, the conversion criterion may be a payment channel for streaming small amounts of crypto tokens per each time and/or data unit. It shall be understood that other transaction criteria and further information can be included in a conversion transaction agreement. More information/criteria can be, for example, a time stamp, an ID of the transaction and the like.

In order to generate a conversion transaction agreement, e.g. a peer-to-peer module of a creating entity and a peer-to-peer module of a conversion entity can exchange conversion request and response (acceptance) messages via the peer-to-peer application 206. A request message may comprise indications about the above data (identifications, transaction criteria, human-readable code element to be converted, etc.).

For instance, a creating entity can send by a peer-to-peer module a request message to the peer-to-peer application 206 comprising data, such as an identifier assigned to the creating entity, human-readable code element to be converted (or information regarding said human-readable code element), conversion algorithm(s) and/or at least one conversion criterion.

Another message may be an acceptance message of e.g. a conversion entity. An acceptance message may comprise identical or at least similar data details as compared with a request message. Additionally, the acceptance message can comprise a reference indication to a previous message, such as the ID of the request message. The acceptance message can be provided by a further peer-to-peer module of the conversion entity or by the peer-to-peer application (e.g. according to preset rules).

If, for example, the acceptance message comprises a higher or other transaction criterion and/or other desired conversion algorithm or time frame, the acceptance message can be called a counter-offer message. This can be accepted by the peer-to-peer module of the creating entity through an acceptance message. Based on this a peer-to-peer module of an entity may cause the generation of a conversion transaction agreement about one or more conversion process(es).

In particular, there can be multiple offer messages and/or request/accepting messages and/or messages. Each entity can give guidelines, according to which at least one conversion transaction agreement or other agreements, such as a verification agreement, can be generated. In a preferably automated, such as iterative process, each request message can be associated to an optimally corresponding acceptance message. The block chain 206 may be configured to generate, based on the messages of a peer-to-peer module, a conversion transaction agreement.

Moreover, a block chain 206 may comprise a (not shown) registration means configured to register a participating entity. The registration means of the peer-to-peer application may be configured to receive a registering message of a peer-to-peer module. The registration means may be configured to register the requesting entity (user and/or computing device) by storing a unique (peer-to-peer) identifier. The identifier can be stored in an identifier list. Preferably, the identifier list can be stored in the peer-to-peer application and/or a storage arrangement controlled by the peer-to-peer application. The identifier list can be used for an above descripted authorization process or validation process of sent/received messages.

More particularly, an entity including a user, device, unit, vehicle or the like can be registered in the peer-to-peer application, as e.g. a so called smart asset. Each registered entity (participating entity) can be stored with its unique (peer-to-peer identifier) e.g. in one or more identifier list(s) of authorized entities. An identifier of an entity might be already a peer-to-peer identifier or another identifier suitable to uniquely identify the entity. The unique identifier may be a serial number or a smart asset hash of e.g. the entity, the user's name of the entity, vehicle identification number, a communication address of an entity, a signature, etc. If e.g. an identifier of an entity is not already a unique peer-to-peer identifier, e.g. if the identifier is non-unique name of a user, the peer-to-peer application, in particular, the registration means, may be configured to generate an unique peer-to-peer identifier for the respective entity (according to preset rule(s)).

It shall be understood that an entity can be a user registered in the peer-to-peer application. Each registered user can be stored with or linked to its unique (peer-to-peer identifier) e.g. in one or more identifier list(s) of authorized entities. According to an embodiment of the method according to the present application, a user may authenticate himself at one of the devices in the system.

Prior to the registration of an entity (e.g. user, vehicle, gateway device, etc.), at least part of the nodes (peers) of the peer-to-peer network may check, in particular, by executing the registration means, whether the registering requirements (such as specific entity specifications or valid signatures or compliance requirements) predefined by the peer-to-peer network are met by the entity requesting registration. For instance, it may be necessary that a conversion entity or verification entity meets predefined technical specifications. In order to perform the check, preferably, further data may be included in the registering message. In particular, the peers of the peer-to-peer network may provide registering rules or registering requirements which must be fulfilled by an entity to be regarded as a trustful entity. Rules/requirements may be individually defined by the peers of a peer-to-peer network. E.g. it may be necessary that a new entity must be recommended by an entity which is already a participant of the peer-to-peer network. In addition, it may be necessary that this participant must have a reputation attribute (value) which increases a predefined minimum reputation attribute (value). For instance, if a conversion entity has a low reputation attribute (value) e.g. due to incorrectly conducted conversion process or if a creating entity has a low reputation attribute e.g. due to detected non-payment of (some) invoice(s), the respective entity may not be registered by the registration means.

Figure 3 shows a schematic view of another embodiment of a system 300 of the invention. In the present embodiment only nodes and participants 304.1, 304.2 of the peer-to-peer network 302 are shown. In the present example, it is assumed that all nodes 304.1, 304.2 comprise the peer-to-peer application (not shown).

The nodes 304.1, 304.2 may be computing devices configured to execute the at least one peer-to-peer application. It shall be understood that a node may be configured to conduct further tasks. It shall be understood that nodes can be full, remote or light nodes.

As can be seen, two different types of peers or node computers 304.1, 304.2 are presently illustrated. All nodes 304.1, 304.2 are comprised by the peer-to-peer network 302. In the present embodiment, however, only a part of the peers 304.1, 304.2 in the present case, the peers (nodes) 304.1, check the validity of e.g. a received message, an executed process, such as a compilation process or verification process, data stored in the peer-to-peer application, such as transaction agreements, registering data set(s), and the like.

Furthermore, only a part of the entire nodes can be configured to store the peer-to-peer application and/or only a part of the nodes can be configured to execute the algorithms of a machine-readable code element (e.g. a smart or private contract). Since the validation/verification of e.g. identification data requires a considerable computational effort, it may be advantageous for reasons of efficiency, if only a part of the nodes 304.1, especially particularly powerful peers 304.1, perform the validation algorithms.

Validation, analytics and optimization can be done on-chain or off-chain, as described hereinbefore. Off-chain validation and/or optimization can be managed by the peer-to-peer application, like the code on the block chain. Powerful means, in particular, a high computing power. In other words, in the present case a valid entry in the peer-to-peer application, such as a block chain, is assumed if (only) a part of the peers 304.1 comes to a positive result. It shall be understood that only a single, especially particularly powerful peer can perform the validation, analytics and/or optimization process.

Similarly, in an alternative (not shown) embodiment, a particularly large peer-to-peer network may be divided in two or more clusters. In a corresponding peer-to-peer network, for example, a validation will only be carried out by the members of one cluster (e.g. sharding of a block chain to improve the scalability). In a further embodiment, the peer-to-peer application can be formed using multiple block chains. These block chains are connected via frameworks such as sidechains or smart contracts or interlegder.

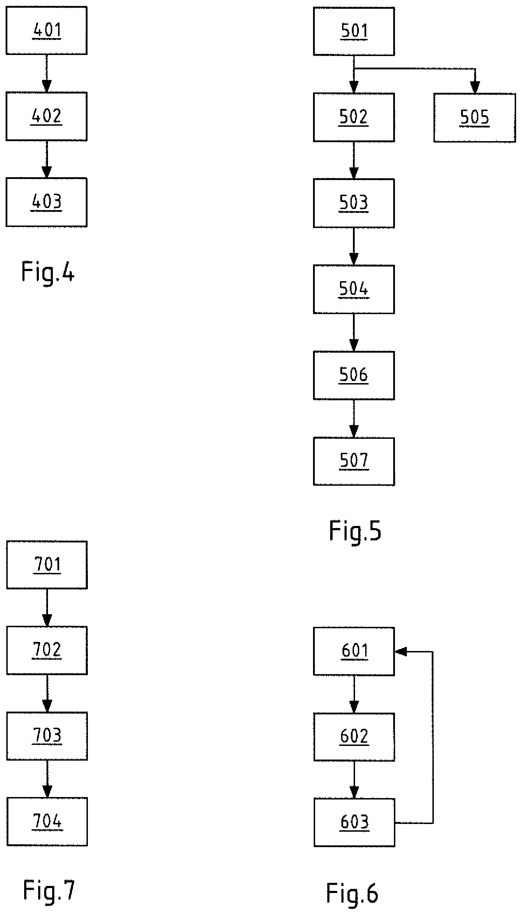

Figure 4 shows a diagram of an embodiment of a method according to the present application. In a first step 401, at least one human-readable code element can be provided. The human-readable code element can comprise human-readable code language and/or programming language. Further, at least one function attribute, preferably, a plurality of function attributes can be provided. The at least one function attribute is associated with the provided human-readable code element. A function attribute comprises information about the functionality of the provided human-readable code element. By way of example only, a function attribute can be an algorithm to be conducted by the provided human-readable code element. A function attribute is an input test parameter data set and an (desired) output test parameter data set (if the input test parameter data set is processed).

In the next steps 402, 403, the provided human-readable code element can be registered in the peer-to-peer application. For example, at least one registering tool can be provided. In particular the peer-to-peer application can comprise the registering tool. By means of the registering tool a registering data set can be stored for each provided human-readable code element.

In particular, in order to register a code element an unique code identifier is assigned to the code element (step 402). For instance, the registering tool can comprise at least one code identifier generating means configured to generate said unique code identifier. The unique code identifier may be a code which uniquely identifies the code element at least within the peer-to-peer system. The code identifier may be an unique hash value, a unique communication address, and/or the like.

Then at least the code identifier and the at least function attribute are stored as the registering data set by the peer-to-peer application, e.g. by a storing means of the registering tool (step 403). In particular, the code identifier and the at least function attribute are stored in at least one registry storage inspectable by at least a part of the participating entities of the peer-to-peer network. Further data may be stored during registering step 403 (or in further registering step(s), as will be described hereinafter). For instance, the at least one creating entity (e.g. a user and/or a computing device of a user, which/who created the human-readable code element), e.g. its identifier, further data relating to said creating entity, such as a reputation attribute of the creating entity, and/or further used processing units, such as a compiler for compiling a human language code into machine language code in order to form a human-readable code element, can be stored.

Since preferably all code elements are registered in a registry storage by the peer-to-peer application, wherein said registry storage is inspectable by preferably all participating entities of the peer-to-peer system (it may be possible that access restriction(s) might exist in a peer-to-peer system), the subsequent functioning of a machine-readable code element corresponding to said human-readable code element can be verified and validated, respectively. Further, since preferably all code elements are registered in the registry storage, code elements are generally and easily searchable. In other words, a participant may be capable, e.g. by using a searching means provided by the peer-to-peer application, to look for a desired code element e.g. having one or more desired function attribute(s) and/or other attribute(s).

Figure 5 shows a schematic view of a further embodiment of the present application. In a first step 501, a provided human-readable code element can be converted to a machine-readable code element by means of a compiler. As previously described, the compiler may be provided by a node or a participating entity of the peer-to-peer system.

Thereby, a creating entity of the human-readable code element may select, prior to the conversion, a conversion entity e.g. from a plurality of conversion entities which meets predefinable requirement(s), such as a specific minimum reputation factor, a specific conversion criterion (e.g. an amount of cryptocurrency for converting the compiler), a minimum processing power, sufficient capacity, etc. For instance, a conversion transaction agreement about the conversion details (code to be converted, IDs of involved entities, specific conversion criterion, etc.) can be generated between these two entities by means of the peer-to-peer application.

Upon generation of said machine-readable code element and prior to actually releasing said element for use in the peer-to-peer system, the functionality of said machine-readable code element can be verified and validated, respectively, in steps 502 to 504.

Furthermore, upon generation of said machine-readable code element said machine-readable code element can be registered in the peer-to-peer application (step 505). This means, preferably, that the register data set of the human-readable code element corresponding to said machine-readable code element can be updated by adding information about said generated machine-readable code element and/or the generation of said machine-readable code element. For instance, a further (or the already used) unique code identifier can be assigned (and stored) to said machine-readable code element. Further, the identifier of the at least one compiler used can be stored. Further data related to the generated machine-readable code element can be stored. It shall be understood that step 505 may also be conducted (at least partly) upon a provision of a positive verification result.

In step 502, a predefinable (automatic or semi-automatic) function test procedure can be conducted under the control of the peer-to-peer application, e.g. by means of a verifying means of the peer-to-peer application. In particular, at least one function test procedure can be conducted by at least executing the converted machine-readable code element according to at least one predefinable function test setup on at least a part of the nodes of the peer-to-peer network.

By way of example, the one or more function attribute(s) may define at least one function test setup suitable to test the correct functioning of the generated machine-readable code element. The function attribute(s) may comprise a test input or verification parameter data set and at least one test output data set. Further function attributes, such as algorithm(s), can be provided. In particular, the function test setup may be at least partly defined by the function attribute(s). The test output data set represents a process result if the test input parameter data set is processed by the machine-readable code element in a correct manner.

In step 503, which might be at least partly conducted in parallel to step 502, the conducted function test is analyzed based on the at least one stored function attribute (see step 402). For instance, a result of the processing of a function test setup can be compared with one or more stored function attribute(s). An actual test output data set is compared with the test output data set stored as function attribute(s).

Based on the analysis, a verification result is provided in step 504. If an analyses results in that the machine-readable code element works correctly, e.g. in accordance with the stored function attribute(s), a positive verification attribute is created. Otherwise, a negative verification attribute, i.e. a non-verification attribute, is created. If the actual test output data set is (essentially) identical to the test output data set stored in form of function attributes, it is followed that the machine-readable code element is not manipulated. A positive verification attribute can be created. If there is a deviation (e.g. outside predefinable limit(s)) between the actual test output data set and the test output data set stored in form of function attributes it can be followed that the machine-readable code element has been manipulated. At least, it can be followed that the machine-readable code element does not work as desired. A negative non-verification attribute can be created.

In the next step 506, at least the created attribute can be stored in the registry storage, in particular, as a further part of the register data set corresponding to the human-readable code element and/or machine-readable code element. Optionally, in step 506, the reputation attribute of the compiler used can be adapted. For instance, if a positive verification attribute is created the reputation attribute of the compiler can be increased (or at least maintained). Otherwise, the reputation attribute can be reduced. In particular, the reputation attribute may be reduced in order to indicate that the used compiler might be manipulated.

If a machine-readable code element has been validated, i.e. is associated with a positive verification attribute, the machine-readable code element can be implemented in the peer-to-peer application (step 507). Preferably, the machine-readable code element can be implemented on each node comprising said peer-to-peer application. According to a preferred embodiment, the machine-readable code element can be sealed, i.e. stored in a sealed manner. A sealed machine-readable code element is characterized in that such a machine-readable code element cannot be changed any more. Such a machine-readable code element (e.g. a private smart contract) can be executed by at least one peer-to-peer processing apparatus and/or a set of nodes, off-chain computers and/or done in measured launch environment or a secure hardware enclave that cannot be manipulated by other software code running on the devices. In an embodiment, secure Multi-Party-Computing (sMPC) systems can be used for transactional privacy. Examples for privacy preserving protocols and computation are HAWK and MIT Enigma, as described hereinbefore.

Upon implementation of the machine-readable code element, further data related to the implemented machine-readable code element can be added to the respective registering data set (if not already comprised by the registering data set) corresponding to the human-readable code element and/or machine-readable code element. For instance, the current (unique) communication address of the machine-readable code element, links to other code elements, etc. can be additionally stored.

Figure 6 shows a diagram according to a further embodiment of a method according to the application. In a first step 601, the peer-to-peer application can be scanned by e.g. a scanning means of the peer-to-peer application. For instance, unique identifiers (e.g. hash values and/or communication addresses) of, preferably, all currently implemented machine-readable code elements (within the at least one peer-to-peer application) can be detected.

In a next step 602, it is checked whether the at least one peer-to-peer application comprises new (unknown) machine-readable code element(s) (e.g. due to a substitution of a former machine-readable code element by a new one and/or due to an addition of a new machine-readable code element). For instance, a comparing means can compare the detected unique identifiers with stored identifiers of the registered machine-readable code elements. If a detected identifier does not correspond to one of the stored identifiers, it can be followed that the machine-readable code element corresponding to said detected identifier is a new machine-readable code element. Further, if a stored identifier does not correspond to one of the (newly) detected identifiers, it can be followed that the machine-readable code element corresponding to said stored identifier is no longer implemented in the at least one peer-to-peer application. In particular, based on the above it can be followed that one machine-readable code element has been substituted by a new machine-readable code element.

Alternatively or additionally, a comparing means can be configured to compare the identifiers detected in the current scanning step with identifiers detected in a previously conducted scanning step. For instance, all detected identifiers of a first scanning step can be stored e.g. in the peer-to-peer application or storage arrangement controlled by the peer-to-peer application. Then, the detected identifiers of a further (subsequent) scanning step can be compared with the stored identifiers of the first scanning step. After the comparison step, the detected identifiers of the further scanning step can be stored (e.g. the formerly stored identifiers can be overwritten) in order to use these identifiers for evaluating the identifiers of a further scanning step.

In step 603, based on the evaluation, in particular, comparison step 602, an evaluation result can be provided and e.g. stored by the peer-to-peer application. The evaluation result may be inspectable by preferably all participating entities of the peer-to-peer system. In addition, if new machine-readable code element(s) is/are detected, a message can be (actively) sent to at least one participating entity. For instance, in order to receive such a message informing about at least one new machine-readable code element a previous registering including an indication that respective messages should be sent to said at least one participating entity might be necessary.

Figure 7 shows a diagram according to a further embodiment of a method according to the application. In particular, a dynamic search function is shown. In a first step 701 the search function may identify a list of machine-readable code element(s) (e.g. smart contracts) that fulfill requirement(s) such as function attribute(s) and/or reputation score(s) and/or other registered attribute(s) (e.g. geography of a physical entity).

In a further step 702, the dynamic search function may send a dynamic execution parameter definition request and, in particular, a set of input parameter(s) (e.g. usage parameters) to the list of machine-readable code element(s) that were identified in the previous step 701.

The machine-readable code element(s) may answer the request by providing a dynamic execution parameter response and, in particular, a dynamic execution parameter definition request ID (step 703). This response and e.g. the ID may be stored in the peer-to-peer application. It shall be understood that further parameter(s) can be returned as well (e.g. expiration time of a response).Based on the search result(s) and/or the search algorithm(s), the responses can be ranked.

A buying entity can e.g. automatically decide which selling entity has the best offer based on the search result(s) (e.g. in step 704). The buying entity can initiate a transaction agreement with the preferred machine-readable code element(s) of a selling entity e.g. based on pre-defined dynamic execution parameter response ID. These pre-defined parameter(s) may be automatically used by the machine-readable code element(s). The use of the dynamic execution parameter response ID in the machine-readable code element(s) can be a verified attribute of the machine-readable code.

With this process a buying entity can automatically contract a selling entity based on dynamic terms that are predefined and immutable prior to the transaction.

## Claims

1. Method for operating peer-to-peer system (100, 300) with at least one peer-to-peer network (102, 302) having at least one peer-to-peer application (106, 206), the method comprising:
- providing at least one human-readable code element associated with at least one function attribute, comprising a test input parameter set and at least one test output data set,
- registering at least the human-readable code element,
- wherein registering the human-readable code element comprises:
- assigning a code identifier to the human-readable code element,
- storing at least the code identifier of the human-readable code element and the function attribute associated with the human-readable code element as a registering data set by the peer-to-peer application in at least one registry storage (122) inspectable by at least a part of the participating entities (104.1, 104.2, 104.3, 114.1, 114.2, 114.3, 114.4, 304.1, 304.2) of the peer-to-peer system (100, 300),
- converting the human-readable code element into at least one machine-readable code element implementable at least in a peer-to-peer application (106, 206), and
- verifying the functionality of the converted machine-readable code element by means of at least one verifying means (126) at least based on the stored function attribute associated to the human-readable code element, wherein verifying the functionality of the machine-readable code element comprises:
- conducting at least one function test process by at least executing the converted machine-readable code element on at least one computing device (114.4, 104.1, 104.2, 104.3, 304.1, 304.2) with the test input parameter data set,
- analyzing the conducted function test process at least based on the stored function attribute by comparing the actual test output data set with the test output data set stored, wherein if the actual test output data set is essentially identical to the test output data set stored in form of function attributes, it is followed that the machine-readable code element is not manipulated, and
- providing a verification result based on the conducted analysis.

2. Method according to claim 1, wherein providing a verification result based on the conducted analysis comprises:
- creating a positive verification attribute if the function test process has been conducted in accordance with the stored function attribute, and/or
- creating a negative verification attribute if the function test procedure has been not conducted in accordance with the stored function attribute.

3. Method according to claim 2, wherein the method further comprises registering a converted machine-readable code element, wherein registering the machine-readable code element comprises:
- storing at least the created verification attribute associated with the machine-readable code element by the peer-to-peer application as a part of the registry data set of the corresponding human-readable code element in the registry storage (122).

4. Method according to claim 2 or 3, wherein at least the machine-readable code element associated with the verification attribute is implemented by storing the machine-readable code element by means of the peer-to-peer application (106, 206) as a sealed machine-readable code element.

5. Method according to any of the preceding claims 2 to 4, wherein the method further comprises adapting a reputation attribute of a compiler (112, 124, 212) used for converting the human-readable code element into the machine-readable code element at least based on the verification result.

6. Method according to any of the preceding claims, wherein the at least one peer-to-peer application (106, 206) comprises a plurality of machine-readable code elements, wherein the method comprises:
- scanning the peer-to-peer application (106, 206) by detecting the identifiers of the implemented machine-readable code elements, and
- detecting a newly implemented machine-readable code element by comparing the detected identifiers with the identifiers stored in the registry storage (122).

7. Method according to any of the preceding claims, wherein a searching means (236) configured to search at least one desired code element is provided.

8. Method according to any of the preceding claims, wherein
- the peer-to-peer application (106, 206) is a decentralized register or a shared database, and
- wherein data is stored by the peer-to-peer application (106, 206) with given certain proofs or signatures.

9. Method according to any of the preceding claims, wherein the at least one peer-to-peer application (106, 206) is a block chain or decentral ledger comprising at least two blocks (251, 253, 255) coupled to each other.

10. Peer-to-peer system (100, 300), comprising:
- at least one peer-to-peer network (102, 302) having at least one peer-to-peer application (106, 206),
- at least one registry storage (122) at least controllable by the peer-to-peer application (106, 206),
- wherein at least one code identifier assigned to at least one human-readable code element and at least one function attribute, comprising a test input parameter set and at least one test output data set, associated with the human-readable code element is stored as a registering data set by the peer-to-peer application (106, 206) in the registry storage (122) inspectable by at least a part of the participating entities (104.1, 104.2, 104.3, 114.1, 114.2, 114.3, 114.4, 304.1, 304.2) of the peer-to-peer system (100, 300),
- at least one converting means for converting the human-readable code element into at least one machine-readable code element implementable at least in a peer-to-peer application (106, 206), and
- at least one verifying means for verifying the functionality of the converted machine-readable code element by means of at least one verifying means (126) at least based on the stored function attribute associated to the human-readable code element, wherein verifying the functionality of the machine-readable code element comprises:
- conducting at least one function test process by at least executing the converted machine-readable code element on at least one computing device (114.4, 104.1, 104.2, 104.3, 304.1, 304.2) with the test input parameter data set,
- analyzing the conducted function test process at least based on the stored function attribute by comparing the actual test output data set with the test output data set stored, wherein if the actual test output data set is essentially identical to the test output data set stored in form of function attributes, it is followed that the machine-readable code element is not manipulated, and
- providing a verification result based on the conducted analysis.

11. Peer-to-peer application (106, 206), comprising:
- at least one code identifier generating means (108, 208) at least configured to assign a code identifier to at least one provided human-readable code element, and
- at least one storing means (110, 210) configured to store at least the code identifier of the human-readable code element and at least one function attribute, comprising a test input parameter set and at least one test output data set, associated with the human-readable code element as a registering data set in at least one registry storage (122) inspectable by at least a part of the participating entities (104.1, 104.2, 104.3, 114.1, 114.2, 114.3, 114.4, 304.1, 304.2) of the peer-to-peer network (102, 302),
- at least one converting means for converting the human-readable code element into at least one machine-readable code element implementable at least in a peer-to-peer application (106, 206), and
- at least one verifying means for verifying the functionality of the converted machine-readable code element at least based on the stored function attribute associated to the human-readable code element, wherein verifying the functionality of the machine-readable code element comprises:
- conducting at least one function test process by at least executing the converted machine-readable code element on at least one computing device (114.4, 104.1, 104.2, 104.3, 304.1, 304.2) with the test input parameter data set,
- analyzing the conducted function test process at least based on the stored function attribute by comparing the actual test output data set with the test output data set stored, wherein if the actual test output data set is essentially identical to the test output data set stored in form of function attributes, it is followed that the machine-readable code element is not manipulated, and
- providing a verification result based on the conducted analysis.

12. Verification entity (114.4), comprising:
- at least one peer-to-peer module (116.4) at least configured to receive a machine-readable code element and at least one associated function attribute, comprising a test input parameter set and at least one test output data set, from at least one peer-to-peer application (106, 206) of at least one peer-to-peer network (102, 302), wherein the machine-readable code element results from a conversion of a human-readable code element into the machine-readable code element, wherein the function attribute is associated with the human-readable code element, and
- at least one verifying means (126) configured to verify the functionality of the received machine-readable code element at least based on the received function attribute, wherein verifying the functionality of the machine-readable code element comprises:
- conducting at least one function test process by at least executing the converted machine-readable code element on at least one computing device (114.4, 104.1, 104.2, 104.3, 304.1, 304.2) with the test input parameter data set,
- analyzing the conducted function test process at least based on the stored function attribute by comparing the actual test output data set with the test output data set stored, wherein if the actual test output data set is essentially identical to the test output data set stored in form of function attributes, it is followed that the machine-readable code element is not manipulated, and
- providing a verification result based on the conducted analysis.

## Patentansprüche

1. Verfahren zum Betreiben eines Peer-to-Peer-Systems (100, 300) mit mindestens einem Peer-to-Peer-Netzwerk (102, 302) mit mindestens einer Peer-to-Peer-Anwendung (106, 206), wobei das Verfahren umfasst:
- Bereitstellen mindestens eines menschenlesbaren Codeelements, das mit mindestens einem Funktionsattribut assoziiert ist, das einen Testeingabeparametersatz und mindestens einen Testausgabedatensatz umfasst,
- Registrieren zumindest des menschenlesbaren Codeelements,
- wobei das Registrieren des menschenlesbaren Codeelements umfasst:
- Zuordnen eines Code-Identifikators zu dem menschenlesbaren Code-Element,
- Speichern zumindest des Code-Identifikators des menschenlesbaren CodeElements und des Funktionsattributs, das mit dem menschenlesbaren Code-Element assoziiert ist, als einen Registrierungs-Datensatz durch die Peer-to-Peer-Anwendung in zumindest einem Registrierungsspeicher (122), der durch zumindest einen Teil der teilnehmenden Entitäten (104.1, 104.2, 104.3, 114.1, 114.2, 114.3, 114.4, 304.1, 304.2) des Peer-to-Peer-Systems (100, 300) inspizierbar ist,
- Konvertieren des menschenlesbaren Codeelements in mindestens ein maschinenlesbares Codeelement, das zumindest in einer Peer-to-Peer-Anwendung (106, 206) implementierbar ist, und
- Verifizieren der Funktionalität des konvertierten maschinenlesbaren Codeelements mittels mindestens eines Verifizierungsmittels (126), zumindest auf der Basis des mit dem menschenlesbaren Codeelement assoziierten gespeicherten Funktionsattributs, wobei das Verifizieren der Funktionalität des maschinenlesbaren Codeelements umfasst:
- Durchführen mindestens eines Funktionstestprozesses durch zumindest einem Ausführen des konvertierten maschinenlesbaren Codeelements auf mindestens einer Recheneinrichtung (114.4, 104.1, 104.2, 104.3, 304.1, 304.2) mit dem Testeingabeparameter-Datensatz,
- Analysieren des durchgeführten Funktionstestprozesses, zumindest basierend auf dem gespeicherten Funktionsattribut durch Vergleichen des tatsächlichen Testausgangsdatensatzes mit dem gespeicherten Testausgangsdatensatz, wobei, wenn der tatsächliche Testausgangsdatensatz im Wesentlichen identisch mit dem in Form von Funktionsattributen gespeicherten Testausgangsdatensatz ist, daraus geschlossen wird, dass das maschinenlesbare Codeelement nicht manipuliert wurde, und
- Bereitstellen eines Verifikationsergebnisses auf der Grundlage der durchgeführten Analyse.

2. Verfahren nach Anspruch 1, wobei das Bereitstellen eines Verifikationsergebnisses auf der Grundlage der durchgeführten Analyse Folgendes umfasst:
- Erzeugen eines positiven Verifikationsattributs, wenn der Funktionstestprozess in Übereinstimmung mit dem gespeicherten Funktionsattribut durchgeführt wurde, und/oder
- Erzeugen eines negativen Verifikationsattributs, wenn der Funktionstestvorgang nicht in Übereinstimmung mit dem gespeicherten Funktionsattribut durchgeführt wurde.

3. Verfahren nach Anspruch 2, wobei das Verfahren ferner das Registrieren eines konvertierten maschinenlesbaren Codeelements umfasst, wobei das Registrieren des maschinenlesbaren Codeelements umfasst:
- Speichern zumindest des erzeugten Verifizierungsattributs, das mit dem maschinenlesbaren Codeelement durch die Peer-to-Peer-Anwendung assoziiert ist, als Teil des Registrierungs-Datensatzes des entsprechenden menschenlesbaren Codeelements in dem Registrierungsspeicher (122).

4. Verfahren nach Anspruch 2 oder 3, wobei zumindest das mit dem Verifikationsattribut assoziierte maschinenlesbare Codeelement durch Speichern des maschinenlesbaren Codeelements mittels der Peer-to-Peer-Anwendung (106, 206) als ein versiegeltes maschinenlesbares Codeelement implementiert wird.

5. Verfahren nach einem der vorhergehenden Ansprüche 2 bis 4, wobei das Verfahren ferner das Anpassen eines Reputationsattributs eines Compilers (112, 124, 212) umfasst, der für das Konvertieren des menschenlesbaren Codeelements in das maschinenlesbare Codeelement verwendet wird, zumindest auf der Grundlage des Verifikationsergebnisses.

6. Verfahren nach einem der vorhergehenden Ansprüche, wobei die mindestens eine Peer-to-Peer-Anwendung (106, 206) eine Mehrzahl von maschinenlesbaren Codeelementen umfasst, wobei das Verfahren umfasst:
- Scannen der Peer-to-Peer-Anwendung (106, 206) durch Detektieren der Identifikators der implementierten maschinenlesbaren Codeelemente, und
- Detektieren eines neu implementierten maschinenlesbaren Codeelements durch Vergleichen der erfassten Kennungen mit den in dem Registrierungsspeicher (122) gespeicherten Kennungen.

7. Verfahren nach einem der vorhergehenden Ansprüche, wobei ein Suchmittel (236) vorgesehen ist, das zum Suchen mindestens eines gewünschten Codeelements eingerichtet ist.

8. Verfahren nach einem der vorangehenden Ansprüche, wobei
- die Peer-to-Peer-Anwendung (106, 206) ein dezentrales Register oder eine geteilte Datenbank ist, und
- wobei Daten von der Peer-to-Peer-Anwendung (106, 206) mit bestimmten Nachweisen oder Signaturen gespeichert werden.

9. Verfahren nach einem der vorhergehenden Ansprüche, wobei die mindestens eine Peer-to-Peer-Anwendung (106, 206) eine Blockchain oder ein dezentraler Ledger mit mindestens zwei miteinander gekoppelten Blöcken (251, 253, 255) ist.

10. Peer-to-Peer-System (100, 300), umfassend:
- mindestens ein Peer-to-Peer-Netzwerk (102, 302) mit mindestens einer Peer-to-Peer-Anwendung (106, 206),
- mindestens einen Registrierungsspeicher (122), der zumindest von der Peer-to-Peer-Anwendung (106, 206) kontrollierbar ist,
- wobei mindestens ein mit mindestens einem menschenlesbaren Codeelement assoziierter Code-Identifikator und mindestens ein dem menschenlesbaren Codeelement zugeordnetes Funktionsattribut, das einen Testeingabeparametersatz und mindestens einen Testausgabedatensatz umfasst, von der Peer-to-Peer-Anwendung (106, 206) als ein Registrierungs-Datensatz in dem Registrierungsspeicher (122) gespeichert wird, der von mindestens einem Teil der beteiligten Entitäten (104. 1, 104.2, 104.3, 114.1, 114.2, 114.3, 114.4, 304.1, 304.2) des Peer-to-Peer-Systems (100, 300) inspizierbar ist,
- mindestens ein Konvertierungsmittel zum Konvertieren des menschenlesbaren Codeelements in mindestens ein maschinenlesbares Codeelement, das zumindest in einer Peer-to-Peer-Anwendung (106, 206) implementierbar ist, und
- mindestens ein Verifizierungsmittel zum Verifizieren der Funktionalität des konvertierten maschinenlesbaren Codeelements mittels mindestens eines Verifizierungsmittels (126), zumindest auf der Grundlage des mit dem menschenlesbaren Codeelement assoziierten gespeicherten Funktionsattributs, wobei das Verifizieren der Funktionalität des maschinenlesbaren Codeelements umfasst:
- Durchführen mindestens eines Funktionstestprozesses durch zumindest einem Ausführen des konvertierten maschinenlesbaren Codeelements auf mindestens einer Recheneinrichtung (114.4, 104.1, 104.2, 104.3, 304.1, 304.2) mit dem Testeingabeparameter-Datensatz,
- Analysieren des durchgeführten Funktionstestprozesses, zumindest basierend auf dem gespeicherten Funktionsattribut durch Vergleichen des tatsächlichen Testausgangsdatensatzes mit dem gespeicherten Testausgangsdatensatz, wobei, wenn der tatsächliche Testausgangsdatensatz im Wesentlichen identisch mit dem in Form von Funktionsattributen gespeicherten Testausgangsdatensatz ist, daraus geschlossen wird, dass das maschinenlesbare Codeelement nicht manipuliert wurde, und
- Bereitstellen eines Verifikationsergebnisses auf der Grundlage der durchgeführten Analyse.

11. Peer-to-Peer-Anwendung (106, 206), umfassend:
- mindestens ein Code-Identifikator-Erzeugungsmittel (108, 208) eingerichtet zum Zuordnen mindestens eines bereitgestellten menschenlesbaren Codeelements einen Code-Identifikators, und
- mindestens ein Speichermittel (110, 210), eingerichtet zum Speichern zumindest des Code-Identifikators des menschenlesbaren Codeelements und zumindest eines Funktionsattributs, das einen Testeingabeparametersatz und mindestens einen Testausgabedatensatz umfasst, das mit dem vom menschenlesbaren Codeelement assoziiert ist, als einen Registrierungsdatensatz in mindestens einem Registrierungsspeicher (122), der von mindestens einem Teil der teilnehmenden Entitäten (104. 1, 104.2, 104.3, 114.1, 114.2, 114.3, 114.4, 304.1, 304.2) des Peer-to-Peer-Netzwerks (102, 302) inspizierbar ist,
- mindestens ein Konvertierungsmittel zum Konvertieren des menschenlesbaren Codeelements in mindestens ein maschinenlesbares Codeelement, das zumindest in einer Peer-to-Peer-Anwendung (106, 206) implementierbar ist, und
- mindestens ein Verifizierungsmittel zum Verifizieren der Funktionalität des konvertierten maschinenlesbaren Codeelements, zumindest auf der Grundlage des gespeicherten Funktionsattributs, das mit dem menschenlesbaren Codeelement assoziiert ist, wobei das Verifizieren der Funktionalität des maschinenlesbaren Codeelements umfasst:
- Durchführen mindestens eines Funktionstestprozesses durch zumindest einem Ausführen des konvertierten maschinenlesbaren Codeelements auf mindestens einer Recheneinrichtung (114.4, 104.1, 104.2, 104.3, 304.1, 304.2) mit dem Testeingabeparameter-Datensatz,
- Analysieren des durchgeführten Funktionstestprozesses, zumindest basierend auf dem gespeicherten Funktionsattribut durch Vergleichen des tatsächlichen Testausgangsdatensatzes mit dem gespeicherten Testausgangsdatensatz, wobei, wenn der tatsächliche Testausgangsdatensatz im Wesentlichen identisch mit dem in Form von Funktionsattributen gespeicherten Testausgangsdatensatz ist, daraus geschlossen wird, dass das maschinenlesbare Codeelement nicht manipuliert wurde, und
- Bereitstellen eines Verifikationsergebnisses auf der Grundlage der durchgeführten Analyse.

12. Verifizierungsentität (114.4), umfassend:
- mindestens ein Peer-to-Peer-Modul (116.4), eingerichtet zum Empfangen eines maschinenlesbares Codeelements und mindestens ein zugeordnetes Funktionsattribut, das einen Testeingabeparametersatz und mindestens einen Testausgabedatensatz umfasst, von mindestens einer Peer-to-Peer-Anwendung (106, 206) mindestens eines Peer-to-Peer-Netzwerks (102, 302), wobei das maschinenlesbare Codeelement aus einem Konvertieren eines menschenlesbaren Codeelements in das maschinenlesbare Codeelement resultiert, wobei das Funktionsattribut mit dem menschenlesbaren Codeelement assoziiert ist, und
- mindestens ein Verifizierungsmittel (126) eingerichtet zum Verifizieren der Funktionalität des empfangenen maschinenlesbaren Codeelements, zumindest auf der Grundlage des empfangenen Funktionsattributs, wobei das Verifizieren der Funktionalität des maschinenlesbaren Codeelements umfasst:
- Durchführen mindestens eines Funktionstestprozesses durch zumindest einem Ausführen des konvertierten maschinenlesbaren Codeelements auf mindestens einer Recheneinrichtung (114.4, 104.1, 104.2, 104.3, 304.1, 304.2) mit dem Testeingabeparameter-Datensatz,
- Analysieren des durchgeführten Funktionstestprozesses, zumindest basierend auf dem gespeicherten Funktionsattribut durch Vergleichen des tatsächlichen Testausgangsdatensatzes mit dem gespeicherten Testausgangsdatensatz, wobei, wenn der tatsächliche Testausgangsdatensatz im Wesentlichen identisch mit dem in Form von Funktionsattributen gespeicherten Testausgangsdatensatz ist, daraus geschlossen wird, dass das maschinenlesbare Codeelement nicht manipuliert wurde, und
- Bereitstellen eines Verifikationsergebnisses auf der Grundlage der durchgeführten Analyse.

## Revendications

1. Procédé d'exploitation d'un système pair-à-pair (100, 300) avec au moins un réseau pair-à-pair (102, 302) ayant au moins une application pair-à-pair (106, 206), le procédé comprenant :
- fournir au moins un élément de code lisible par l'homme associé à au moins un attribut de fonction, comprenant un ensemble de paramètres d'entrée de test et au moins un ensemble de données de sortie de test,
- enregistrer au moins l'élément de code lisible par l'homme,
- où l'enregistrement de l'élément de code lisible par l'homme comprend :
- attribuer un identifiant de code à l'élément de code lisible par l'homme,
- stocker au moins l'identifiant de code de l'élément de code lisible par l'homme et l'attribut de fonction associé à l'élément de code lisible par l'homme comme un ensemble de données d'enregistrement par l'application pair-à-pair dans au moins un stockage de registre (122) inspectable par au moins une partie des entités participantes (104.1, 104.2, 104.3, 114.1, 114.2, 114.3, 114.4, 304.1, 304.2) du système pair-à-pair (100, 300),
- convertir l'élément de code lisible par l'homme en au moins un élément de code lisible par machine implémentable au moins dans une application pair-à-pair (106, 206), et
- vérifier la fonctionnalité de l'élément de code lisible par machine converti au moyen d'au moins un moyen de vérification (126) au moins sur la base de l'attribut de fonction stocké associé à l'élément de code lisible par l'homme, où la vérification de la fonctionnalité de l'élément de code lisible par machine comprend :
- réaliser au moins un processus de test de fonctionnement en au moins exécutant l'élément de code lisible par machine converti sur au moins un dispositif informatique (114.4, 104.1, 104.2, 104.3, 304.1, 304.2) avec l'ensemble de données de paramètres d'entrée de test,
- analyser le processus de test de fonction effectué au moins sur la base de l'attribut de fonction stocké en comparant l'ensemble de données de sortie de test réel avec l'ensemble de données de sortie de test stocké, où, si l'ensemble de données de sortie de test réel est essentiellement identique à l'ensemble de données de sortie de test stocké sous forme d'attributs de fonction, il est considéré que l'élément de code lisible par machine n'a pas été manipulé, et
- fournir un résultat de vérification basé sur l'analyse effectuée.

2. Procédé selon la revendication 1, où la fourniture d'un résultat de vérification basé sur l'analyse effectuée comprend :
- créer un attribut de vérification positif si le processus de test de fonction a été effectué conformément à l'attribut de fonction stocké, et/ou
- créer un attribut de vérification négatif si le processus de test de fonction n'a pas été effectué conformément à l'attribut de fonction stocké.

3. Procédé selon la revendication 2, où le procédé comprend en outre l'enregistrement d'un élément de code lisible par machine converti, où l'enregistrement de l'élément de code lisible par machine comprend :
- stocker au moins l'attribut de vérification créé associé à l'élément de code lisible par machine par l'application pair-à-pair comme une partie de l'ensemble de données de registre de l'élément de code lisible par l'homme correspondant dans le stockage de registre (122).

4. Procédé selon la revendication 2 ou 3, où au moins l'élément de code lisible par machine associé à l'attribut de vérification est implémenté en stockant l'élément de code lisible par machine au moyen de l'application pair-à-pair (106, 206) comme un élément de code lisible par machine scellé.

5. Procédé selon l'une des revendications précédentes 2 à 4, où le procédé comprend en outre l'adaptation d'un attribut de réputation d'un compilateur (112, 124, 212) utilisé pour convertir l'élément de code lisible par l'homme en l'élément de code lisible par machine au moins sur la base du résultat de la vérification.

6. Procédé selon l'une des revendications précédentes, où l'au moins une application pair -à-pair (106, 206) comprend une pluralité d'éléments de code lisibles par machine, où le procédé comprend :
- scanner l'application pair -à-pair (106, 206) par la détection des identifiants des éléments de code lisibles par machine implémentés, et
- détecter un nouvel élément de code lisible par machine implémenté en comparant les identifiants détectés aux identifiants stockés dans le stockage de registre (122).

7. Procédé selon l'une des revendications précédentes, où un moyen de recherche (236) configuré pour rechercher au moins un élément de code souhaité est fourni.

8. Procédé selon l'une des revendications précédentes, où
- l'application pair -à-pair (106, 206) est un registre décentralisé ou une base de données partagée, et
- où les données sont stockées par l'application pair-à-pair (106, 206) avec certaines preuves ou signatures données.

9. Procédé selon l'une des revendications précédentes, **caractérisé en ce que** l'au moins une application pair -à-pair (106, 206) est une chaîne de blocs ou un ledger décentralisé comprenant au moins deux blocs (251, 253, 255) couplés l'un à l'autre.

10. Système pair-à-pair (100, 300) comprenant :
- au moins un réseau pair-à-pair (102, 302) ayant au moins une application pair-à-pair (106, 206),
- au moins un registre de stockage (122) au moins contrôlable par l'application pair -à-pair (106, 206),
- où au moins un identifiant de code associé à au moins un élément de code lisible par l'homme et au moins un attribut de fonction, comprenant un ensemble de paramètres d'entrée de test et au moins un ensemble de données de sortie de test, associé à l'élément de code lisible par l'homme est stocké comme un ensemble de données d'enregistrement par l'application pair -à-pair (106, 206) dans le stockage de registre (122) inspectable par au moins une partie des entités participantes (104. 1, 104.2, 104.3, 114.1, 114.2, 114.3, 114.4, 304.1, 304.2) du système pair -à-pair (100, 300),
- au moins un moyen de conversion pour convertir l'élément de code lisible par l'homme en au moins un élément de code lisible par machine implémentable au moins dans une application pair -à-pair (106, 206), et
- au moins un moyen de vérification pour vérifier la fonctionnalité de l'élément de code lisible par machine converti au moyen d'au moins un moyen de vérification (126) au moins sur la base de l'attribut de fonction stocké associé à l'élément de code lisible par l'homme, où la vérification de la fonctionnalité de l'élément de code lisible par machine comprend :
- réaliser au moins un processus de test de fonctionnement en au moins exécutant l'élément de code lisible par machine converti sur au moins un dispositif informatique (114.4, 104.1, 104.2, 104.3, 304.1, 304.2) avec l'ensemble de données de paramètres d'entrée de test,
- analyser le processus de test de fonction effectué au moins sur la base de l'attribut de fonction stocké en comparant l'ensemble de données de sortie de test réel avec l'ensemble de données de sortie de test stocké, où, si l'ensemble de données de sortie de test réel est essentiellement identique à l'ensemble de données de sortie de test stocké sous forme d'attributs de fonction, il est considéré que l'élément de code lisible par machine n'a pas été manipulé, et
- fournir un résultat de vérification sur la base de l'analyse effectuée.

11. Application pair-à-pair (106, 206), comprenant :
- au moins un moyen de génération d'identificateur de code (108, 208) au moins configuré pour associer un identificateur de code à au moins un élément de code lisible par l'homme fourni, et
- au moins un moyen de stockage (110, 210) configuré pour stocker au moins l'identifiant de code de l'élément de code lisible par l'homme et au moins un attribut de fonction, comprenant un ensemble de paramètres d'entrée de test et au moins un ensemble de données de sortie de test, associé à l'élément de code lisible par l'homme comme un ensemble de données d'enregistrement dans au moins un stockage de registre (122) inspectable par au moins une partie des entités participantes (104. 1, 104.2, 104.3, 114.1, 114.2, 114.3, 114.4, 304.1, 304.2) du réseau pair-à-pair (102, 302),
- au moins un moyen de conversion pour convertir l'élément de code lisible par l'homme en au moins un élément de code lisible par machine implémentable au moins dans une application pair-à-pair (106, 206), et
- au moins un moyen de vérification pour vérifier la fonctionnalité de l'élément de code lisible par machine converti, au moins sur la base de l'attribut de fonction stocké associé à l'élément de code lisible par l'homme, où la vérification de la fonctionnalité de l'élément de code lisible par machine comprend :
- réaliser au moins un processus de test de fonctionnement en exécutant l'élément de code lisible par machine converti sur au moins un dispositif informatique (114.4, 104.1, 104.2, 104.3, 304.1, 304.2) avec l'ensemble de données de paramètres d'entrée de test,
- analyser le processus de test de fonction effectué au moins sur la base de l'attribut de fonction stocké en comparant l'ensemble de données de sortie de test réel avec l'ensemble de données de sortie de test stocké, où, si l'ensemble de données de sortie de test réel est essentiellement identique à l'ensemble de données de sortie de test stocké sous forme d'attributs de fonction, il est considéré que l'élément de code lisible par machine n'a pas été manipulé, et
- fournir un résultat de vérification sur la base de l'analyse effectuée.

12. Entité de vérification (114.4), comprenant
- au moins un module pair-à-pair (116.4) au moins configuré pour recevoir un élément de code lisible par machine et au moins un attribut de fonction associé, comprenant un ensemble de paramètres d'entrée de test et au moins un ensemble de données de sortie de test, d'au moins une application pair-à-pair (106, 206) d'au moins un réseau pair-à-pair (102, 302), où l'élément de code lisible par machine résulte d'une conversion d'un élément de code lisible par l'homme en élément de code lisible par machine, où l'attribut de fonction est associé à l'élément de code lisible par l'homme, et
- au moins un moyen de vérification (126) configuré pour vérifier la fonctionnalité de l'élément de code lisible par machine reçu, au moins sur la base de l'attribut de fonction reçu, où la vérification de la fonctionnalité de l'élément de code lisible par machine comprend :
- réaliser au moins un processus de test de fonctionnement en au moins exécutant l'élément de code lisible par machine converti sur au moins un dispositif informatique (114.4, 104.1, 104.2, 104.3, 304.1, 304.2) avec l'ensemble de données de paramètres d'entrée de test,
- analyser le processus de test de fonction effectué au moins sur la base de l'attribut de fonction stocké en comparant l'ensemble de données de sortie de test réel avec l'ensemble de données de sortie de test stocké, où, si l'ensemble de données de sortie de test réel est essentiellement identique à l'ensemble de données de sortie de test stocké sous la forme d'attributs de fonction, il est considéré que l'élément de code lisible par machine n'a pas été manipulé, et
- fournir un résultat de vérification basé sur l'analyse effectuée.
